(19) 

Europäisches Patentamt

European Patent Office

Office européen des brevets

(11) **EP 4 439 719 A1**

(12) **EUROPEAN PATENT APPLICATION**

(43) Date of publication:
**02.10.2024 Bulletin 2024/40**

(21) Application number: **24156276.8**

(22) Date of filing: **07.02.2024**

(51) International Patent Classification (IPC):
*H01M 4/38* (2006.01)     *H01M 10/052* (2010.01)
*H01M 10/0565* (2010.01)     *H01M 10/42* (2006.01)
*H01M 50/434* (2021.01)     *H01M 50/449* (2021.01)

(52) Cooperative Patent Classification (CPC):
**H01M 4/382; H01M 10/052; H01M 10/0565;**
**H01M 10/4235; H01M 50/434; H01M 50/449;**
H01M 50/451; H01M 2300/0085

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **26.03.2023   KR 20230039360**
**31.03.2023   KR 20230042562**

(71) Applicant: **Samsung SDI Co., Ltd.**
**Yongin-si, Gyeonggi-do 17084 (KR)**

(72) Inventors:
• **Woo, Hyunsik**
**17084 Gyeonggi-do (KR)**

• **Moon, Jongseok**
**17084 Gyeonggi-do (KR)**
• **Lee, Kanghee**
**17084 Gyeonggi-do (KR)**
• **Bae, Woojin**
**17084 Gyeonggi-do (KR)**
• **Kim, Heemin**
**17084 Gyeonggi-do (KR)**
• **Park, Jongseok**
**17084 Gyeonggi-do (KR)**
• **Park, Jinhwan**
**17084 Gyeonggi-do (KR)**

(74) Representative: **Michalski Hüttermann & Partner**
**Patentanwälte mbB**
**Kaistraße 16A**
**40221 Düsseldorf (DE)**

(54) **LITHIUM METAL BATTERY AND METHOD OF PREPARING THE SAME**

(57)     A lithium metal battery including: an anode current collector; a cathode; and a separator between the anode current collector and the cathode, wherein the lithium metal battery may include an anode active material layer between the anode current collector and the separator or may not include (e.g., may exclude or be free of) the anode active material layer, and the separator may include a porous substrate and a ceramic coating layer disposed on at least one side of the porous substrate, wherein the ceramic coating layer may be placed so as to face the anode current collector, and pores in the porous substrate may contain a gel-type or kind polymer electrolyte.

EP 4 439 719 A1

**Description**

**CROSS-REFERENCE TO RELATED APPLICATIONS**

The present application claims priority to and the benefit of Korean Patent Applications Nos. 10-2023-0039360, filed on March 26, 2023, and 10-2023-0042562, filed on March 31, 2023, in the Korean Intellectual Property Office, the entire content of all of which is incorporated herein by reference.

**BACKGROUND**

**1. Field**

Embodiments of the present disclosure described herein are related to a lithium metal battery and a method of preparing the same.

**2. Description of the Related Art**

Lithium metal batteries currently commercially available mainly utilize a carbon-based anode active material such as graphite. A carbon-based anode active material has no volume change during a charging and discharging process, and thus may provide relatively high stability to a lithium metal battery, but its relatively low capacity has given rise to the demand for an anode active material having higher capacity.
As an anode active material, lithium metal with much higher theoretical capacity than that of a carbon-based anode active material may be utilized.
Side reactions between lithium metal and electrolyte during charging and discharging give rise to dendrite formation on the surface of lithium metal, and the growth of dendrites may cause a short circuit between a cathode and an anode, which may cause lifespan characteristics of a lithium metal battery to deteriorate.

**SUMMARY**

Aspects according to one or more embodiments are directed toward a lithium metal battery having a novel structure.
Aspects according to one or more embodiments are directed toward a method of preparing the lithium metal battery.
Aspects according to one or more embodiments are directed toward a lithium metal battery having improved lifespan characteristics through inhibition of dendrite formation and increased electrolyte wettability by utilizing a separator which has a ceramic coating layer only on the side of a porous substrate facing an anode current collector and contains a gel-type or kind polymer electrolyte in pores in the porous substrate.
Additional aspects will be set forth in part in the description which follows and, in part, will be apparent from the description, or may be learned by practice of the presented embodiments of the disclosure.
According to one or more embodiments, a lithium metal battery includes:

an anode current collector; a cathode; and a separator between the anode current collector and the cathode,
wherein the lithium metal battery may include an anode active material layer between the anode current collector and the separator or the lithium metal battery may not include (e.g., may exclude or be free of) the anode active material layer,
the separator may include: a porous substrate; and a ceramic coating layer on one side of the porous substrate, the ceramic coating layer facing the anode current collector,
the other side of the porous substrate may not include (e.g., may exclude or be free of) the ceramic coating layer, and pores in the porous substrate may include a gel-type or kind polymer electrolyte (e.g., a gel-polymer).

According to one or more embodiments of the disclosure, a method of preparing a lithium metal battery includes:

preparing an anode current collector;
forming a separator by forming a ceramic coating layer on one side of the porous substrate;
preparing a cathode;
placing a separator on an anode current collector such that the ceramic coating layer faces the anode current collector;
forming a battery structure by arranging the anode current collector, the separator, and the cathode;
accommodating the battery structure in a battery case and injecting a gel-type or kind polymer electrolyte forming composition (e.g., a gel-polymer electrolyte polymer electrolyte forming composition) into the resulting structure; and forming a gel-type or kind polymer electrolyte (e.g., a gel-polymer electrolyte) by curing the gel-type or kind polymer electrolyte forming composition, to thereby prepare the above-described lithium metal battery.

## BRIEF DESCRIPTION OF THE DRAWINGS

The above and other aspects, features, and advantages of certain embodiments of the disclosure will be more apparent from the following description taken in conjunction with the accompanying drawings, in which:

FIG. 1 is a cross-sectional view of an anode according to one or more embodiments;
FIG. 2 is a cross-sectional view of an anode according to one or more embodiments;
FIG. 3 is a schematic diagram of a lithium metal battery according to one or more embodiments;
FIG. 4 is a schematic diagram of a lithium metal battery according to one or more embodiments; and
FIG. 5 is a schematic diagram of a lithium metal battery according to one or more embodiments.

## DETAILED DESCRIPTION

Reference will now be made in more detail to embodiments, examples of which are illustrated in the accompanying drawings, wherein like reference numerals refer to like elements throughout, and duplicative descriptions thereof may not be provided. In this regard, the present embodiments may have different forms and should not be construed as being limited to the descriptions set forth herein. Accordingly, the embodiments are merely described herein, by referring to the drawings, to explain aspects of the present description. As utilized herein, the term "and/or" includes any and all combinations of one or more of the associated listed items. Expressions such as "at least one of," when preceding a list of elements, modify the entire list of elements and do not modify the individual elements of the list.

The present disclosure, which will be more fully described hereinafter, may have one or more suitable variations and one or more suitable embodiments, and specific embodiments will be illustrated in the accompanied drawings and described in greater detail. However, the present disclosure should not be construed as being limited to specific embodiments set forth herein. Rather, these embodiments are to be understood as encompassing all variations, equivalents, or alternatives included in the scope of the present disclosure.

The terminology utilized hereinbelow is utilized for the purpose of describing particular embodiments only and is not intended to limit the present disclosure. As utilized herein, the singular forms are intended to include the plural forms as well, unless the context clearly indicates otherwise. As utilized herein, the terms "comprises" and/or "comprising," or "includes" and/or "including" when utilized in this specification, specify the presence of stated features, regions, integers, steps, operations, elements, components, ingredients, materials, or combinations thereof, but do not preclude the presence or addition of one or more other features, regions, integers, steps, operations, elements, components, ingredients, materials, or combinations thereof. As utilized herein, "/" may be interpreted as "and", or as "or" depending on the context.

In the drawings, the thicknesses of layers and regions may be exaggerated for clarity of description.

Like reference numerals denote like elements throughout, and duplicative descriptions thereof may not be provided the specification. Throughout the specification, when a component, such as a layer, a film, a region, or a plate, is described as being "above" or "on" another component, the component may be directly above the another component, or there may be yet other component(s) therebetween. It will be understood that although the terms "first," "second," etc. may be utilized herein to describe one or more suitable elements, these elements should not be limited by these terms. These terms are only utilized to distinguish one element from another element. In the present specification and the drawings, elements that serve substantially the same function are labeled with the same reference numeral and may not be discussed redundantly.

As utilized herein, the term "particle diameter" of a particle refers to an average particle diameter if the particle is spherical, and for a particle that is non-spherical, said term refers to an average major axis length of the particle. The particle diameter of particles may be measured utilizing a particle size analyzer (PSA). The term "particle diameter" of particles may refer to an average diameter of the particles, for example. The average particle diameter may be, for example, a median particle diameter (D50). The median particle diameter (D50) refers to a particle size corresponding to a cumulative volume of 50 vol% when counted from the smallest particle size in a particle size distribution as measured by a laser diffraction method. The average particle diameter and average major axis length of particles may be measured utilizing a scanning electron microscope. When measuring the size of particles utilizing a scanning electron microscope, the particle size may be determined as the average size of 30 or more randomly selected particles of 1 $\mu$m or larger, excluding extremely fine particles.

As utilized herein, the term "metal" refers to both metals and metalloids such as silicon and germanium, in an elemental or ionic state.

As utilized herein, the term "alloy" refers to a mixture of two or more metals.

As utilized herein, the term "cathode active material" refers to a cathode material capable of undergoing lithiation and delithiation.

As utilized herein, the term "anode active material" refers to an anode material capable of undergoing lithiation and delithiation.

As utilized herein, the terms "lithiation" and "to lithiate" refer to a process of adding lithium to a cathode active material or an anode active material.

As utilized herein, the terms "delithiation" and "to delithiate" refer to a process of removing lithium from a cathode active material or an anode active material.

As utilized herein, the terms "charging" and "charge" refer to a process of providing electrochemical energy to a battery.

As utilized herein, the terms "discharging" and "discharge" refer to a process of removing electrochemical energy from a battery.

As utilized herein, the terms "positive electrode" and "cathode" refer to an electrode at which electrochemical reduction and lithiation take place during the discharging process.

As utilized herein, the terms "negative electrode" and "anode" refer to an electrode at which electrochemical reduction and delithiation take place during the discharging process.

Hereinbelow, a lithium metal battery according to one or more embodiments and a method of preparing the same will be described in greater detail.

Hereinbelow, an embodiment will be described in greater detail with reference to the accompanied drawings; however, the present disclosure is not limited to these examples. While one or more embodiments have been described with reference to the drawings, it will be understood by those of ordinary skill in the art that one or more suitable changes in form and details may be made therein without departing from the spirit and scope of the disclosure as defined by the following claims and equivalents thereof.

An anodeless lithium metal battery is a battery that makes use of an anode current collector alone without an anode active material layer, and the battery is operated through the process in which lithium ions transferred from the cathode are deposited on the surface of the anode current collector upon charging, and upon discharging, lithium deposited on the anode current collector dissolves again and intercalates into the cathode.

Due to the absence of lithium metal typically utilized as an anode active material, an anodeless lithium metal battery is advantageous in terms of maximizing or increasing energy density per volume/weight of the battery. However, lithium metal being plated or deposited during an operation process may show lithium dendrite growth due to a substantially non-uniform current concentration during oxidation/reduction processes, and lithium dendrites cause lithium anode loss, and thus may deteriorate the capacity and lifespan of the battery and also give rise to safety issues by causing a short circuit at the anode and the cathode.

Methods proposed to address the aforementioned issues include introduction of a protection film to reduce side reactions by minimizing or reducing contact between lithium and electrolyte, and use of a gel polymer electrolyte which introduces liquid electrolyte into the network of a crosslinked polymer to minimize or reduce the exposure of electrolyte on the electrode surface and create a substantially uniform lithium ion flow throughout the electrode, thereby inhibiting the growth of dendritic lithium.

A polyolefin-based membrane utilized as a porous substrate of a separator in a lithium secondary battery has tortuosity and limited porosity to prevent or reduce a short circuit failure, and therefore has an ion conductivity about 10 times lower that of a bulk-state electrolyte. A gel-type or kind polymer electrolyte may have improved safety relative to a purely liquid electrolyte but have increased resistance.

A lithium metal battery according to one or more embodiments may address the aforementioned issues by having a ceramic coating layer formed on a porous substrate only in a direction that faces an anode current collector, and utilizing a separator containing a gel-type or kind polymer electrolyte in pores in the porous substrate.

A lithium metal battery according to one or more embodiments may include: an anode current collector; a cathode; and a separator between the anode current collector and the cathode,

wherein the lithium metal battery may include an anode active material layer between the anode current collector and the separator, or may not include (e.g., may exclude or be free of) the anode active material layer, the separator may include: a porous substrate; and a ceramic coating layer disposed on one surface of the porous substrate, the ceramic coating layer may be positioned so as to face the anode current collector, the other side of the porous substrate may not include (e.g., may exclude or be free of) a ceramic coating layer, and pores in the porous substrate may include a gel-type polymer electrolyte.

When the ceramic coating layer is formed on both (e.g., opposite) sides of the porous substrate constituting a separator, the separator may have excellent or suitable ion conductivity as a result of improved wettability to electrolyte;

however, with increasing cell thickness, the volumetric energy density of the lithium metal battery may decrease.

However, in a lithium metal battery according to one or more embodiments, by forming the ceramic coating layer only on one side of the porous substrate, cell performance in the lithium metal battery may be maximized or increased through inhibition of lithium dendrite formation through rigidity of the ceramic coating layer, without drastically increasing cell resistance.

The ceramic coating layer due to having nanopores may give rise to capillary action and thus improve the wettability to electrolyte. Here, the nanopores may have a size (breadth) of about 1 nm to about 500 nm.

In the present specification, the size of nanopores may refer to an average diameter when the nanopores have a spherical shape, and may refer to an average major axis length if the nanopores have a non-spherical shape. The size of nanopores may be identified through analysis of a scanning electron microscopy image. In some embodiments, by adopting a separator with the above-described ceramic coating layer, thermal resistance may be ensured, and thermal shrinkage characteristics may be improved, and by reducing the margins of the separator for ensuring safety in cell designs, the material cost of the lithium metal battery may be reduced. In some embodiments, physical inhibition of growth of dendrites at the anode may achieve improved long-term lifespan of the lithium metal battery at room temperature and at high temperatures.

If the ceramic coating layer is disposed on both (e.g., opposite) sides of the porous substrate such that each ceramic coating layer faces the cathode and the anode, respectively, an increase of additional resistance components may lead to increased overvoltage due to an increase in the overall resistance of the lithium metal battery, which may result in a decrease in long-term lifespan and volumetric energy density of the cell.

The ceramic coating layer may have a thickness, for example an average thickness, of about 10 nm to about 5,000 nm, about 50 nm to about 4,000 nm, about 100 nm to about 3,500 nm, about 200 nm to about 3,000 nm, or about 500 nm to about 2,000 nm. When the thickness of the ceramic coating layer is within the above ranges, the separator may show excellent or suitable wettability to electrolyte and excellent or suitable inhibition of dendrite growth.

According to one embodiment of the lithium metal battery, wherein the ceramic coating layer comprises large-diameter inorganic particles and small-diameter inorganic particles, the small-diameter inorganic particles have an average particle diameter of about 50 nm to about 500 nm, and the large-diameter inorganic particles have an average particle diameter of about 1 $\mu$m to about 10 $\mu$m, and/or a mixing weight ratio of the large-diameter inorganic particles to the small-diameter inorganic particles in the ceramic coating layer is about 9:1 to about 1:1.

According to one embodiment of the lithium metal battery, wherein the ceramic coating layer comprises large-diameter inorganic particles and small-diameter inorganic particles, the small-diameter inorganic particles have an average particle diameter D50 of about 50 nm to about 500 nm, and the large-diameter inorganic particles have an average particle diameter D50 of about 1 $\mu$m to about 10 $\mu$m, and/or a mixing weight ratio of the large-diameter inorganic particles to the small-diameter inorganic particles in the ceramic coating layer is about 9:1 to about 1:1.

The ceramic coating layer may include inorganic particles and a binder.

For the inorganic particles, any inorganic particles usable for forming a coating layer of a separator may be utilized, and for example, may utilize any one of inorganic oxides from among $SiO_2$, $Al_2O_3$, $Al(OH)_3$, $AlO(OH)$, $TiO_2$, $BaTiO_3$, $ZnO_2$, and $Mg(OH)_2$, and aluminum nitride (AIN), silicon carbide (SiC), boron nitride (BN), or a combination thereof.

The inorganic particles may utilize inorganic particles with a dielectric constant of 5 or more, such as BaTiOs, BaTiOs, $Pb(Zr,Ti)O_3$ (PZT), $Pb_{1-a}La_aZr1_{-b}Ti_bO_3$ (PLZT, wherein 0<a<1 and 0<b<1), $Pb(Mg_{1/3}Nb_{2/3})O_3$-$PbTiO_3$ (PMN-PT), hafnia ($HfO_2$), SrTiOs, $SnO_2$, $CeO_2$, MgO, NiO, CaO, ZnO, $ZrO_2$, $Y_2O_3$, $Al_2O_3$, $TiO_2$, SiC, or a combination thereof.

In some embodiments, the ceramic coating layer may further include inorganic particles with capacity to transport lithium ions, such as lithium phosphate ($Li_3PO_4$), lithium titanium phosphate ($Li_cTi_d(PO_4)_3$, 0<d<2 and 0<d<3), $(LiAl\text{-}TiP)_{a2}O_{b2}$ type or kind glass (0<a2<4 and 0<b2<13) such as lithium aluminum titanium phosphate ($Li_{a1}Al_{b1}Ti_{c1}(PO_4)_3$, 0<a1<2, 0<b1 <1, and 0<c1<3) and $14Li_2O\text{-}9Al_2O_3\text{-}38TiO_2\text{-}39P_2O_5$, lithium lanthanum titanate ($Li_{a3}La_{b3}TiO_3$, 0<a3<2 and 0<b3<3), lithium germanium thiophosphate such as $Li_{3.25}Ge_{0.25}P_{0.75}S_4$ ($Li_{a4}Ge_{b4}P_{c2}S_d$, 0<a4<4, 0<b4<1, 0<c2<1, and 0<d<5), lithium nitride such as LisN ($Li_{a5}N_{b5}$, 0<a5<4 and 0<b5<2), $SiS_2$ type or kind glass such as $Li_3PO_4\text{-}Li_2S\text{-}SiS_2$ ($Li_{a6}Si_{b6}S_{c3}$, 0<a6<3, 0<b6<2, and 0<c4<4), $P_2S_5$ type or kind glass such as Lil-$Li_2S$-$P_2S_5$ ($Li_{a7}P_{b7}S_{c5}$, 0<a7<3, 0<b7<3, and 0<c5<7), or a mixture thereof.

The binder may include, for example, one or more selected from among polyvinylidene fluoride, a polyvinylidene fluoride-hexafluoropropylene copolymer, a polyvinylidene fluoride-trichloroethylene copolymer, a polyvinylidene fluoride-chlorotrifluoroethylene copolymer, polymethyl methacrylate, polyacrylonitrile, polyvinylpyrrolidone, polyvinyl acetate, an ethylene vinyl acetate copolymer, polyethylene oxide, cellulose acetate, cellulose acetate butylate, cellulose acetate propionate, cyanoethyl pullulan, cyanoethyl polyvinyl alcohol, cyanoethyl cellulose, cyanoethyl sucrose, pullulan, carboxyl methyl cellulose (CMC), an acrylonitrile styrene butadiene copolymer, and polyimide. Pores in the porous substrate constituting the separator may contain a gel-type or kind polymer electrolyte containing a liquid electrolyte and a crosslinked polymer. In the separator having such a structure, the liquid electrolyte may be contained in a crosslinked polymer network having a crosslinked structure and therefore prevented or reduced from leaking outside.

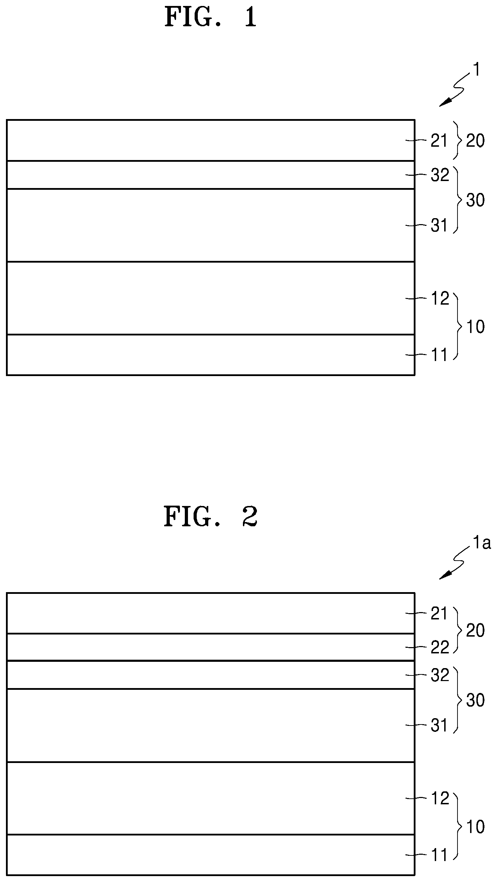

Referring to FIG. 1, on an anode current collector 21, a separator 30 including a porous substrate 31 and a ceramic coating layer 32 disposed on one side of the porous substrate 31 may be stacked. The ceramic coating layer 32 may be positioned in surface-contact with the anode current collector 21. Here, an anode 20 includes the anode electrode current collector 21 and does not include (e.g., excludes or free of) the anode active material layer, wherein the ceramic coating layer 32 is disposed adjacent to the anode current collector 21.

As shown in FIG. 1, the ceramic coating layer 32 may be formed on one side of the porous substrate 31, the ceramic coating layer 32 may be not formed on the other side of the porous substrate 31, and a cathode 10 may be disposed on the other side of the porous substrate 31. The cathode 10 may include a cathode active material layer 12 and a cathode current collector 11.

The ceramic coating layer 32 may include large-diameter inorganic particles and small-diameter inorganic particles. Accordingly, by utilizing large-diameter inorganic particles and small-diameter inorganic particles together, it may be possible to form a ceramic coating layer with excellent or suitable film strength and effectively inhibit the growth of lithium dendrites between the anode current collector and the separator.

In the ceramic coating layer, the mixing weight ratio of the large-diameter inorganic particles to the small-diameter inorganic particles may be about 9:1 to about 1:1, about 8:1 to about 1:1, about 5:1 to about 1:1, about 4:1 to about 1:1, about 3:1 to about 1:1, or about 2:1 to about 1:1. When the mixing weight ratio of the large-diameter inorganic particles to the small-diameter inorganic particles is within the above ranges, dendrite growth at the anode may be effectively inhibited.

The small-diameter inorganic particles may have an average particle diameter of about 50 nm to about 500 nm, about 70 nm to about 400 nm, about 80 nm to about 450 nm, or about 100 nm to about 300 nm. The large-diameter inorganic particles may have an average particle diameter of about 1 $\mu$m to about 10 $\mu$m, about 2 $\mu$m to about 9 $\mu$m, about 4 $\mu$m to about 8 $\mu$m, or about 5 $\mu$m to about 7 $\mu$m. When the average particle diameters of the large-diameter inorganic particles and the small-diameter inorganic particles are in the above ranges, dendrite growth may be effectively inhibited.

Each of the small-diameter inorganic particles and the large-diameter inorganic particles may utilize two or more types (kinds) of particles having a particle diameter within the aforementioned ranges.

According to one or more embodiments, the small-diameter inorganic particles may utilize a mixture of first small-diameter inorganic particles having an average particle diameter of about 50 nm to about 200 nm, and second small-diameter inorganic particles having an average particle diameter of about 250 nm to about 400 nm. The first small-diameter inorganic particles and the second small-diameter inorganic particles may be inorganic particles having the same composition or a different composition from each other. Using inorganic particles having a different average particle diameter and/or composition together as small-diameter inorganic particles may result in a denser coating film and effectively inhibits the growth of lithium dendrites.

According to one or more embodiments, the large-diameter inorganic particles may include a first large-diameter alumina particle and a second large-diameter alumina particle. The first large-diameter inorganic particle and the second large-diameter inorganic particle may have a different composition from each other. The first large-diameter inorganic particle and the second large-diameter inorganic particle may have the same average particle diameter. For example, the average particle diameter may be about 1 $\mu$m to about 5 $\mu$m.

The first large-diameter inorganic particles and the second large-diameter inorganic particles may have a different average particle diameter from each other. For example, the first large-diameter inorganic particles may have an average particle diameter of about 1 $\mu$m to about 5 $\mu$m, and the second large-diameter inorganic particles may have an average particle diameter of about 5 $\mu$m to about 10 $\mu$m.

The ceramic coating layer 32 may further include a binder. The binder may include polyvinylidene fluoride, polyvinyl alcohol, carboxymethyl cellulose (CMC), starch, hydroxypropyl cellulose, regenerated cellulose, and polyvinylpyrrolidone, tetrafluoroethylene, polyethylene, polypropylene, ethylene-propylene-diene terpolymer (EPDM), sulfonated EPDM, styrene butylene rubber, an acrylic polymer, fluoro rubber, or a combination thereof. The content (e.g., amount) of the binder may be about 5 parts by weight to about 20 parts by weight with respect to 100 parts by weight of a total weight of the large-diameter inorganic particles and the small-diameter inorganic particles. If (e.g., when) the content (e.g., amount) of the binder is within the above range, the bonding strength of the ceramic coating layer to the porous substrate may be excellent or suitable.

As shown in FIG. 1, there may be no anode active material layer present between the anode current collector 21 and the ceramic coating layer 32.

In some embodiments, there may be a protective layer further included between the anode current collector and the separator. When the anode active material layer is present, the protective layer may be formed between the anode active material layer and the separator. For example, the protective layer may contain a polymer or a polymer and an inorganic filler. The polymer includes polyvinyl alcohol, polyimide, a vinylidene fluoride-hexafluoropropylene copolymer, polyvinylidene fluoride, carboxymethylcellulose, and styrene butyrene rubber, or a combination thereof. Examples of the inorganic fillers may include $SiO_2$, $Al_2O_3$, $Al(OH)_3$, $AlO(OH)$, $TiO_2$, $BaTiO_s$, $ZnO_2$, $Mg(OH)_2$, aluminum

nitride (AIN), silicon carbide (SiC), boron nitride (BN), or a combination thereof. For example, the protective layer may have a thickness, for example an average thickness, of about 1 $\mu$m to about 20 $\mu$m. As such, further incorporation of such a protective layer may decrease side reactions by minimizing or reducing the contact between lithium and the electrolyte solution, and may suppress or reduce the growth of lithium dendrites by forming a substantially uniform flow of lithium ions throughout the electrode.

Pores in the porous substrate 31 may contain a gel-type or kind polymer electrolyte containing liquid electrolyte and a crosslinked polymer, and the crosslinked polymer may be a polymerized product of a crosslinkable monomer.

The separator 30 may generally have a pore diameter of about 0.01 $\mu$m to about 10 $\mu$m and generally have a thickness, for example an average thickness, of about 5 $\mu$m to about 20 $\mu$m. Examples of the separator may include a sheet, a non-woven fabric, and/or the like, formed of an olefin-based polymer such as polyethylene, polypropylene and/or the like; or glass fibers. When a solid polymer electrolyte is utilized as the electrolyte, the solid polymer electrolyte may act as a separator.

The separator 30 may be a multi-layer film including olefin-based polymers and has two or more layers. The multi-layer film may be, for example, a double-layer separator of polyethylene/polypropylene, a triple-layer separator of polyethylene/polypropylene/polyethylene, or a triple-layer separator of polypropylene/polyethylene/polypropylene.

For example, the separator may be a polymer membrane including polypropylene, polyethylene, polyethylene terephthalate, polybutylene terephthalate, polyester, polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylene naphthalene, or a combination thereof.

The crosslinkable monomer may include one or more selected from among trimethylolpropane trimethacrylate (TMPTMA), diethylene glycol diacrylate (DEGDA), diethylene glycol dimethacrylate (DEGDMA), triethylene glycol diacrylate (TEGDA), triethylene glycol dimethacrylate (TEGDMA), tetraethylene glycol diacrylate (TTEGDA), glycidyl methacrylate, polyethylene glycol diacrylate (PEGDA), polyethylene glycol dimethacrylate (PEGDMA), polypropylene glycol diacrylate (PPGDA) ), dipropylene glycol diacrylate (DPGDA), tripropylene glycol diacrylate (TPGDA), dianol diacrylate (DDA), dianol dimethacrylate (DDMA), ethoxylated trimethylolpropane triacrylate (ETPTA), acrylate-functionalized ethylene oxide, butanediol dimethacrylate, ethoxylated neopentyl glycol diacrylate (NPEOGDA), propoxylated neopentyl glycol diacrylate (NPPOGDA), trimethylolpropane triacrylate (TMPTA), trimethylolpropane trimethacrylate (TMPTMA), pentaerythritol triacrylate (PETA), ethoxylated propoxylated trimethylolpropane triacrylate (TMPEOTA)/(TMPPOTA), propoxylated glyceryl triacrylate, tris(2-hydroxyethyl) isocyanurate triacrylate (THEICTA), pentaerythritol tetraacrylate (PETTA), dipentaerythritol pentaacrylate (DPEPA), di(trimethylolpropane) tetraacrylate (DTMPTTA), a diglycidyl ester, diallyl suberate, an acrylamide, and a divinylbenzene.

The crosslinkable monomer, for example, may include a material that is electrochemically stable in a driving environment of a cathode utilizing a cathode active material having a nickel content (e.g., amount) of 90 mol% or more, for example, at a voltage of about 4.3 V or more is utilized. Such a crosslinkable monomer may be polyfunctional (3 substituents) methacrylate, and examples thereof may include trimethylolpropane triacrylate and/or the like.

The crosslinkable monomer may have a weight average molecular weight in a range of about 200 to about 2,000, and may have a weight average molecular weight in a range of about 200 to about 1,000, for example, about 200 to about 500. When the crosslinkable monomer has a weight average molecular weight of less than 200, the density of crosslink junctures within the molecular structure of the polymer following crosslinking may be excessively high such that the movement of lithium salt may be hindered. When the crosslinkable monomer has a weight average molecular weight of more than 2,000, the density of crosslink junctures within the molecular structure of the polymer following crosslinking may be excessively low such that the capacity to block or reduce electrolyte may be diminished.

With respect to the total weight of the crosslinkable monomer and the electrolyte, the amount of the crosslinkable monomer may be about 1 part by weight to about 20 parts by weight, about 2 parts by weight to about 10 parts by weight, or about 3 parts by weight to about 7 parts by weight, and the amount of the electrolyte may be about 80 parts by weight to about 99 parts by weight, about 90 parts by weight to about 98 parts by weight, or about 93 parts by weight to about 97 parts by weight. When the amount of the crosslinkable monomer is smaller than the above ranges, the degree of crosslinking may be too low to sufficiently achieve the effects of crosslinking, and the capacity of retaining liquid electrolyte and mechanical properties may be diminished. When the amount of the crosslinkable monomer is greater than the above ranges, internal resistance within the electrode plate increases, which may contribute to a capacity loss upon high-rate charging and discharging.

The gel-type or kind polymer electrolyte forming composition may further include a crosslinking agent, a photoinitiator, and/or the like, to assist crosslinking of a crosslinkable monomer. The crosslinking agent, the initiator, and/or the like are not particularly limited as long as they are commonly utilized in the art.

For example, the initiator may utilize benzoin ethyl ether and/or the like.

Each of the crosslinking agent, the initiator, and/or the like may be utilized in an amount conventionally utilized in the art. For example, the amount of the initiator may be in a range of about 0.1 parts by weight to about 5 parts by weight, or about 0.2 parts by weight to about 3 parts by weight, with respect to 100 parts by weight of the crosslinkable monomer. As such, the gel-type or kind polymer electrolyte thus formed may be utilized to maintain an ion conductivity that is close to that of liquid electrolyte, while the gel-type or kind polymer electrolyte inside the cathode and anode serves to prevent or reduce leakage of liquid electrolyte. The electrolyte solution trapped in the polymer matrix of the gel-type or kind polymer electrolyte may be retained in the polymer matrix to thereby facilitate movement of lithium ions. In some embodiments, due to excellent or suitable electrochemical properties of the polymer, decomposition of the electrolyte may be inhibited within the range of about -1 V to about 5 V.

Liquid electrolyte may contain a lithium salt and an organic solvent.

In a lithium metal battery according to one or more embodiments, liquid electrolyte may be retained within the polymer matrix of the gel-type or kind polymer electrolyte, such that there is no leakage of liquid electrolyte, and electrochemical side reactions occurring at the cathode and anode, and decomposition of the electrolyte are inhibited, thus ensuring stability and improving battery characteristics.

Examples of the nonaqueous solvent may include aprotic organic solvents, such as N-methyl-2-pyrrolidinone, propylene carbonate, ethylene carbonate, butylene carbonate, dimethyl carbonate, diethyl carbonate, $\gamma$-butyrolactone, 1,2-dimethoxyethane, tetrahydroxy furan, 2-methyl tetrahydrofuran, dimethyl sulfoxide, 1,3-dioxolane, formamide, dimethylformamide, dioxolane, acetonitrile, nitromethane, methyl formate, methyl acetate, phosphoric acid triesters, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate. Among the aforementioned examples, a carbonate-based solvent such as propylene carbonate, ethylene carbonate, butylene carbonate, dimethyl carbonate, diethyl carbonate and/or the like, may be utilized.

The lithium salt may be any lithium salt commonly utilized in lithium secondary batteries, and as a material easily dissolvable in the above nonaqueous solvents, may utilize at least one of materials such as LiSCN, $LiN(CN)_2$, $LiClO_4$, $LiBF_4$, $LiAsF_6$, $LiPF_6$, $LiCF_3SO_3$, $LiC(CF_3SO_2)_3$, $LiC(FSO_2)_3$, $LiN(SO_2C_2F_5)_2$, $LiN(SO_2CF_3)_2$, $LiN(SO_2F)_2$, $LiSbF_6$, $LiPF_3(CF_2CF_3)_3$, $LiPF_3(CF_3)_3$, $LiB(C_2O_4)_2$, and/or the like.

The concentration of the lithium salt may be, for example, about 1 M to about 5 M, for example, about 1 M to about 2.5 M in the electrolyte. Within the above ranges, a sufficient amount of lithium ions necessary for charging and discharging of a lithium secondary battery may be generated.

When the gel-type or kind polymer electrolyte is present in pores in the porous substrate, interfacial resistance between the cathode, the anode, and the separator may be minimized or reduced, facilitating lithium transfer.

As shown in FIG. 2, an anode active material layer 22 may be present between the anode current collector 21 and the ceramic coating layer 32.

According to one or more embodiments, the anode active material layer may be placed during lithium metal battery assembly. According to one or more embodiments, the anode active material layer may include an anode active material layer as lithium metal may be plated or deposited after charging. The anode active material layer may be a plated lithium layer or a deposited lithium layer. According to one or more embodiments, there is no anode active material layer disposed between the anode current collector and the separator prior to charging.

The anode active material layer 22 may include lithium metal or a lithium alloy.

The anode active material layer 22 may have a thickness, for example an average thickness, of about 1 $\mu$m to about 500 $\mu$m, about 5 $\mu$m to about 500 $\mu$m, or about 10 $\mu$m to about 500 $\mu$m. When the thickness of the anode active material layer is within the above ranges, cycle characteristics of the lithium metal battery may be improved without a decrease in the energy density thereof.

When the anode active material layer is disposed during assembly, a carbonaceous material alone, or a combination of a carbonaceous material and at least one selected from among a metal and a metalloid may be included.

The carbonaceous material may include amorphous carbon, the amorphous carbon may have an average particle diameter (e.g., breadth) of about 10 nm to about 100 nm, and the carbonaceous material may include carbon black (CB), acetylene black (AB), furnace black (FB), Ketjen black (KB), graphene, or a combination thereof.

The anode material layer may include a lithium metal foil, lithium metal powder, a foil of a lithium alloy, powder of a lithium alloy, or a combination thereof, and the lithium alloy may include lithium and a first metal.

The first metal may include indium (In), silicon (Si), gallium (Ga), tin (Sn), aluminum (Al), Titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K), calcium (Ca), yttrium (Y), bismuth (Bi), tantalum (Ta), hafnium (Hf), barium (Ba), vanadium (V), strontium (Sr), lanthanum (La), or a combination thereof.

For example, the anode active material layer 22 may include a lithium foil, lithium powder, or a combination thereof. Examples of the lithium foil may include a lithium metal foil, a lithium alloy foil, or a combination thereof. The lithium powder may include lithium metal powder, lithium alloy powder, or a combination thereof. The lithium alloy may be an alloy of lithium with another metal alloyable with lithium, and may include, for example, a lithium-silver alloy, a lithium-zinc alloy, a lithium-magnesium alloy, a lithium-tin alloy, and/or the like. The anode active material layer including a lithium metal foil may be, for example, a lithium metal layer. The anode active material layer including a lithium alloy foil may be, for example, a lithium alloy layer. An anode active material layer including lithium metal powder and/or lithium alloy powder may be introduced by coating a slurry containing lithium powder and a binder on the anode current collector. The binder may be, for example, a fluorine-based binder such as polyvinylidene fluoride (PVDF). The anode active material layer may not include (e.g., may exclude or be free of) carbon-based anode active materials. Thus, the anode active material layer may be formed of a metal-based anode active material.

The anode current collector may be composed of, for example, a material that does not react with lithium, that is, that does not form an alloy or a compound. Examples of the material forming the anode current collector may include copper (Cu), stainless steel, titanium (Ti), iron (Fe), cobalt (Co), nickel (Ni), and/or the like. However, the material forming the anode current collector 21 is not necessarily limited to the aforementioned materials but may be any material available as an electrode current collector in the art. The anode current collector may be formed of one of the aforementioned metals, an alloy of two or more metals thereof, or a coating material. For example, the anode current collector may be a plate type or kind or a foil type or kind.

In an embodiment, the cathode current collector 11 may include, for example, a base film and a metal layer disposed on one side or both (e.g., opposite) sides of the base film. The cathode current collector may be, for example, in the form of a plate or a foil, each consisting of In, Cu, Mg, stainless steel, Ti, Fe, Co, Ni, Zn, Al, Ge, Li, or an alloy thereof. The cathode current collector may not be provided. The thickness, for example an average thickness, of the cathode current collector may be, for example, about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

The cathode current collector may include, for example, a base film and a metal layer disposed on one side or both (e.g., opposite) sides of the base film. The base film may include, for example, a polymer. The polymer may be, for example, a thermoplastic polymer. The polymer may be, for example, polyethyleneterephtalate (PET), polyethylene (PE), polyprolylene (PP), polybutyleneterephthalate (PBT), polyimide (PI), or any combination thereof. The polymer may be an insulator. Because the base film includes an insulating thermoplastic polymer, the base film is softened or liquefied to block or reduce the operation of a battery in the case of occurrence of a short circuit, so that a rapid current increase may be inhibited. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or any alloy thereof. The metal layer acts as an electrochemical fuse and is cut by an overcurrent, thereby preventing or reducing a short circuit. By controlling a thickness, for example an average thickness, of the metal layer, a limiting current and a maximum current may be adjusted. The metal layer may be plated or deposited on the base film. As the thickness of the metal layer decreases, the limiting current and/or maximum current of the cathode current collector decrease, so that stability of the lithium battery may be improved in the case of a short circuit. A lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. A metal chip may further be added between the metal layer and the lead tab for stronger welding between the metal layer and the lead tab. The metal chip may be a chip of the same material as the metal of the metal layer. The metal chip may be, for example, metal foil and metal mesh. The metal chip may be, for example, aluminum foil, copper foil, and SUS foil. By performing welding after disposing the metal chip on the metal layer, the lead tab may be welded to the metal chip/metal layer stack structure or the metal chip/metal layer/base film stack structure. While the base film, the metal layer, and/or the metal chip melt during welding, the metal layer or metal layer/metal chip stack structure may be electrically connected to the lead tab. A metal chip and/or a lead tab may further be added to the metal layer. The base film may have a thickness, for example an average thickness, of 1 $\mu$m to 50 $\mu$m, 1.5 $\mu$m to 50 $\mu$m, 1.5 $\mu$m to 40 $\mu$m, or 1 to 30 $\mu$m. With the thickness of the base film within the above-described ranges, the weight of the electrode assembly may be more effectively reduced. A melting point of the base film may be, for example, from 100 °C to 300 °C, from 100 °C to 250 °C, or from 100 °C to 200 °C. Because the base film has a melting point within the above-described ranges, the base film melts during a process of welding the lead tab to be easily bound to the lead tab. To improve adhesion between the base film and the metal layer, surface treatment such as corona treatment may be performed on the base film. The thickness of the metal layer may be, for example, from 0.01 $\mu$m to 3 $\mu$m, from 0.1 $\mu$m to 3 $\mu$m, from 0.1 $\mu$m to 2 $\mu$m, or from 0.1 $\mu$m to 1 $\mu$m. With the thickness of the metal layer within the above-described ranges, stability of the electrode assembly may be obtained while maintaining conductivity thereof. The thickness, for example an average thickness, of the metal chip may be, for example, from 2 $\mu$m to 10 $\mu$m, from 2 $\mu$m to 7 $\mu$m, or from 4 $\mu$m to 6 $\mu$m. With the thickness of the metal chip within the above-described ranges, the metal layer may be more easily connected to the lead tab. Because the cathode current collector has the above-described structure, the weight of the cathode may be reduced, so that energy density of the cathode and the lithium battery may be increased.

The cathode current collector 11 may further include a metal piece and/or a lead-tab. The base film, metal layer, metal piece, and lead-tab of the cathode current collector 11 are described in greater detail in the description of an anode current collector 21. As the cathode current collector 11 has such a structure, the weight of the electrode may be reduced and as a result, energy density may be improved.

The anode active material layer may contain an anode active material and a binder.

The anode active material may have, for example, a particle form. For example, the anode active material having a particle form may have an average particle diameter of about 10 nm to about 4 $\mu$m, about 10 nm to about 1 $\mu$m, about 10 nm to about 500 nm, about 10 nm to about 100 nm, or about 20 nm to about 80 nm. As the anode active material has an average particle diameter within the above ranges, reversible plating and/or dissolution of lithium during charging/discharging may be further facilitated. The average particle diameter of the anode active material may be, for example, a median particle diameter (D50) as measured by a laser-type or kind particle size distribution analyzer.

The anode active material layer may include a carbonaceous anode active material and at least one selected from among a metal anode active material or a metalloid anode active material. The carbonaceous anode active material may be amorphous carbon, for example. Examples of the carbonaceous anode active material may include carbon black (CB), acetylene black (AB), furnace black (FB), Ketjen black (KB), graphene, and/or the like; however, the carbonaceous anode active material is not necessarily limited to the aforementioned examples and may be any material categorized as amorphous carbon in the art. Amorphous carbon is carbon with no crystalline structure or an extremely low degree of crystallinity, and as such, may be distinguished from crystalline carbon or graphitic carbon. The metal or metalloid anode active material may include at least one selected from among gold (Au), platinum (Pt), palladium (Pd), silicon (Si), silver (Ag), aluminum (Al), bismuth (Bi), tin (Sn), and zinc (Zn); however, the metal or metalloid anode active material is not necessarily limited to the aforementioned examples and may be any material available in the art as a metal anode active material or metalloid anode active material that forms an alloy or a compound with lithium. For example, because nickel (Ni) does not form an alloy with lithium, nickel is not regarded as a metal anode active material herein. Among such anode active materials, the anode active material layer may include a single anode active material or may include a mixture of multiple different anode active materials. For example, the anode active material layer may include a mixture of amorphous carbon with at least one metal selected from among gold (Au), platinum (Pt), palladium (Pd), silicon (Si), silver (Ag), aluminum (Al), bismuth (Bi), tin (Sn), and zinc (Zn). The mixing ratio of the mixture may be in weight ratio, for example, about 10:1 to about 1:2, about 10:1 to about 1:1, about 7:1 to about 1:1, about 5:1 to about 1:1, or about 4:1 to about 2:1. The anode active material included in the anode active material layer may include, for example, a mixture of first particles composed of amorphous carbon, and second particles composed of a metal or a metalloid. Examples of the metal may include gold (Au), platinum (Pt), palladium (Pd), silicon (Si), silver (Ag), aluminum (Al), bismuth (Bi), tin (Sn), zinc (Zn), and/or the like. The amount of the second particles may be about 8 wt% to about 60 wt%, about 10 wt% to about 50 wt%, about 15 wt% to about 40 wt%, or about 20 wt% to about 30 wt%, with respect to the total weight of the mixture. As the second particles are included in an amount in the above ranges, for example, cycle characteristics of the lithium metal battery may be further improved.

Examples of the binder included in the anode active material layer may include styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like; however, the binder is not necessarily limited to the aforementioned examples and may be any binder available in the art. The binder may be composed of a single type or kind of binder, or multiple different types (kinds) of binders. When the anode active material layer does not contain any binder, the anode active material layer may be easily separated from the ceramic coating layer 21 or the anode current collector 21. The amount of the binder included in the anode active material layer may be, for example, about 1 wt% to about 20 wt% with respect to the total weight of the anode active material layer.

For example, the anode active material layer may have a thickness, for example an average thickness, of about 1 $\mu$m to about 500 $\mu$m, and for example, the thickness of the anode active material layer may be about 1 % to about 50 %, about 1 % to about 30 %, about 1 % to about 10 %, about 1 % to about 5 % with respect to the thickness, for example an average thickness, of the cathode active material layer. When the thickness of the anode active material layer is excessively thin, lithium dendrites formed between the anode active material layer and the anode current collector may cause the anode active material layer to collapse, thus making it difficult to improve cycle characteristics of the lithium metal battery. When the thickness of the anode active material layer is excessively increased, the lithium metal battery employing the anode 20 may have a decreased energy density, and the cycle characteristics may be difficult to improve.

When the thickness of the anode active material layer decreases, for example, charging capacity of the anode active material layer may also decrease. The charging capacity of the anode active material layer may be, for example, about 0.1 % to about 50 %, about 1 % to about 30 %, about 1 % to about 10 %, about 1 % to about 5 %, or about 1 % to about 2 % with respect to a total charging capacity. When the charging capacity of the anode active material layer is excessively small, lithium dendrites formed between the anode active material layer and the anode current collector may cause the anode active material layer to collapse, making it difficult to improve cycle characteristics of the lithium metal battery. When the charging capacity of the anode active material layer is excessively increased, the lithium metal battery employing the anode 20 may suffer a decrease in energy density and may be difficult to have improved cycle characteristics. Charging capacity of a cathode active material layer may be obtained by multiplying the charging capacity density (mAh/g) of a cathode active material by the mass of the cathode active material in the cathode active material layer. When multiple types (kinds) of cathode active materials are utilized, the product of charging capacity density $\times$

mass may be calculated for each cathode active material, and the sum of these products may be defined as the charging capacity of the cathode active material layer. Charging capacity of an anode active material layer may be obtained in substantially the same manner described with respect to the cathode active material layer above. For example, charging capacity of an anode active material layer may be obtained by multiplying the charging capacity density (mAh/g) of an anode active material by the mass of the anode active material in the anode active material layer. When multiple types (kinds) of anode active materials are utilized, the product of charging capacity density × mass may be calculated for each anode active material, and the sum of these products may be defined as the charging capacity of the anode active material layer. Here, the charging capacity densities of the cathode active material and the anode active material are capacities estimated utilizing a solid-state half cell that uses lithium metal as counter electrode. By the measurement of charging capacity utilizing a solid-state half cell, charging capacities of the cathode active material layer and the anode active material layer may be directly measured. By dividing the charging capacity thus measured by the mass of each active material, charging capacity density may be obtained. In some embodiments, charging capacities of the cathode active material layer and the anode active material layer may be an initial charging capacity measured during charging at the first cycle.

**Lithium Metal Battery**

A lithium metal battery according to one or more embodiments may include a cathode; cathode; and a separator disposed between the cathode and the anode. Such a lithium metal battery may provide excellent or suitable lifespan characteristics. For example, the lithium metal battery may be a lithium primary battery, a lithium secondary battery, a lithium-sulfur battery, a lithium-air battery, etc., but without being limited thereto, may be any lithium metal battery available in the art.

The lithium metal battery may be prepared by the method described as an example. However, the method by which to prepare the lithium metal battery is not necessarily limited to this method and may be adjusted according to conditions required.

**Cathode**

First, a cathode active material composition may be prepared by mixing a cathode active material, a conductive material, a binder, and a solvent. The cathode active material composition thus prepared may be directly coated or dried on an aluminum current collector to produce a cathode plate having a cathode active material layer formed thereon. In some embodiments, the cathode active material composition may be cast on a separate support, and a film exfoliated from the support may be laminated on the aluminum current collector to thereby form a cathode plate having a cathode active material layer formed thereon.

The cathode active material may be a lithium-containing metal oxide, and may utilize any lithium-containing metal oxide commonly available in the art without limitation. For example, the cathode active material may utilize at least one composite oxide of lithium with a metal selected from among cobalt, manganese, nickel, and a combination thereof, and specifically, may utilize a compound represented by any one selected from among the following formulas: $Li_aA_{1-b}B_bD_2$ (in the formula, $0.90 \leq a \leq 1$ and $0 \leq b \leq 0.5$); $Li_aE_{1-b}B_bO_{2-c}D_c$ (in the formula, $0.90 \leq a \leq 1$, $0 \leq b \leq 0.5$, and $0 \leq c \leq 0.05$); $LiE_{2-b}B_bO_{4-c}D_c$ (in the formula, $0 \leq b \leq 0.5$ and $0 \leq c \leq 0.05$); $Li_aNi_{1-b-c}CO_bB_cD_\alpha$ (in the formula, $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (in the formula, $0.90 \leq a \leq 1$, $0 \leq b \leq 0.5$, $0 \leq c \leq 0.05$, and $0 < \alpha < 2$); $Li_aNi_{1-b-c}Co_bB_cO_{2-\alpha}F_2$ (in the formula, $0.90 \leq a \leq 1$, $0 \leq b \leq 0.5$, $0 \leq c \leq 0.05$, and $0 < \alpha < 2$); $Li_aNi_{1-b-c}Mn_bB_cD_\alpha$ (in the formula, $0.90 \leq a \leq 1$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$ (in the formula, $0.90 \leq a \leq 1$, $0 \leq b \leq 0.5$, $0 \leq c \leq 0.05$, and $0 < \alpha < 2$); $Li_aNi_{1-b-c}Mn_bB_cO_{2-\alpha}F_2$ (in the formula, $0.90 \leq a \leq 1$, $0 \leq b \leq 0.5$, $0 \leq c \leq 0.05$, and $0 < \alpha < 2$); $Li_aNi_bE_cG_dO_2$ (in the formula, $0.90 \leq a \leq 1$, $0 \leq b \leq 0.9$, $0 \leq c \leq 0.5$, and $0.001 \leq d \leq 0.1$); $Li_aNi_bCo_cMn_dGeO_2$ (in the formula, $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (in the formula, $0.90 \leq a \leq 1$ and $0.001 \leq b \leq 0.1$); $Li_aCoG_bO_2$ (in the formula, $0.90 \leq a \leq 1$ and $0.001 \leq b \leq 0.1$); $Li_aMnG_bO_2$ (in the formula, $0.90 \leq a \leq 1$ and $0.001 \leq b \leq 0.1$); $Li_aMn_2G_bO_4$ (in the formula, $0.90 \leq a \leq 1$ and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

In the formulas representing the above compound, A may be Ni, Co, Mn, or a combination thereof; B may be Al, Ni, Co, Mn, Cr, Fe, Mg, Sr, V, a rare-earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound having a coating layer added on a surface of the above compound may also be utilized. Furthermore, a mixture of the above compound with a compound having a coating layer added thereon may also be utilized. The coating layer added on the surface of the above-described compound may include, for example, compounds of a coating element, such as oxides and hydroxides of the coating element, oxyhydroxides of the coating element, oxycarbonates of the coating element, and hydroxycarbonates of the coating element. A compound forming the above coating layer may be amorphous or crystalline. The coating element included in the coating layer may be Mg, Al, Co, K, Na, Ca, Si, Ti, V, Sn, Ge, Ga, B, As, Zr, or a mixture thereof. The method by which to form a coating layer may be selected from among methods that exert no adverse effect on physical properties of the cathode active material. Examples of coating method may include spray coating, dip coating, and/or the like. Specific coating methods are well suitable to those of ordinary skill in the art and therefore, detailed descriptions thereof will not be provided here.

For example, the cathode active material may be $Li_aNi_xCo_yM_zO_{2-b}A_b$ (1.0≤a≤1.2, 0≤b≤0.2, 0.8≤x<1, 0<y≤0.3, 0<z≤0.3, and x+y+z=1, M is manganese (Mn), niobium (Nb), vanadium (V), magnesium (Mg), gallium (Ga), silicon (Si), tungsten (W), molybdenum (Mo), iron (Fe), chromium ( Cr), copper (Cu), zinc (Zn), titanium (Ti), aluminum (Al), boron (B) or a combination thereof, and A is fluorine (F), sulfur (S), chlorine (Cl), bromine (Br), or a combination thereof), $LiNi_xCo_yMn_zO_2$ (0.8≤x≤0.95, 0≤y≤0.2, 0<z≤0.2, and x+y+z=1), $LiNi_xCo_yAl_zO_2$ (0.8≤x≤0.95, 0≤y≤0.2, 0<z≤0.2, and x+y+z=1), $LiNi_xCo_yMn_zAl_wO_2$ (0.8≤x≤0.95, 0≤y≤0.2, 0<z≤0.2, 0<w≤0.2, and x+y+z+w=1), $Li_aCo_xM_yO_{2-b}A_b$ (1.0≤a≤1.2, 0≤b≤0.2, 0.9≤x≤1, 0≤y≤0.1, and x+y=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is fluorine (F), sulfur (S), chlorine (Cl), bromine (Br), or a combination thereof), $Li_aNi_xMn_yM'_zO_{2-b}A_b$ (1.0≤a≤1.2, 0≤b≤0.2, 0<x≤0.3, 0.5≤y<1, 0<z≤0.3, and x+y+z=1, M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A is fluorine (F), sulfur (S), chlorine (Cl), bromine (Br), or a combination thereof), $Li_aM1_xM2_yPO_{4-b}X_b$ (here, 0.90≤a≤1.1, 0≤x≤0.9, 0≤y≤0.5, 0.9<x+y<1.1, and 0≤b≤2, M1 is chromium (Cr), manganese (Mn), iron (Fe), cobalt (Co), nickel (Ni), copper (Cu), zirconium (Zr), or a combination thereof, and M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof), or $Li_aM3_zPO_4$ (0.90≤a≤1.1 and 0.9≤z≤1.1, and M3 is chromium (Cr), manganese (Mn), iron (Fe), cobalt (Co), nickel (Ni), copper (Cu), zirconium (Zr), or a combination thereof).

Examples of the conductive material may include: carbon black, graphite powder, natural graphite, artificial graphite, acetylene black, Ketjen black, and carbon fibers; carbon nanotubes; metal powder, metal fibers, or metal tubes, such as copper, nickel, aluminum, silver, and/or the like; and conductive polymers such as polyphenylene derivatives and/or the like. However, the conductive material is not limited to the aforementioned components but may be any conductive material available in the art. In some embodiments, the cathode may not contain any conductive material, for example.

Examples of the binder may include a vinylidene fluoride/hexafluoropropylene copolymer, polyvinylidene fluoride, polyacrylonitrile, polymethylmethacrylate, polytetrafluoroethylene (PTFE), a mixture of the aforementioned polymers, a styrene butadiene rubber-based polymer, and examples of the solvent may include N-methylpyrrolidone (NMP), acetone, water, and/or the like. However, the binder and the solvent are not necessarily limited to the aforementioned examples and may be any binder or solvent available in the art.

It is also possible to create pores inside an electrode plate by further adding a plasticizer and a pore-forming agent to the cathode active material composition.

The amount of each of the cathode active material, the conductive material, the binder, and the solvent utilized in the cathode may be at a level commonly utilized in a lithium battery. Depending on the intended use and composition of a lithium metal battery, one or more of the conductive materials, the binder, and the solvent may not be provided.

The amount of the binder included in the cathode may be about 0.1 wt% to about 10 wt%, or about 0.1 wt% to about 5 wt%, relative to the total weight of the cathode active material layer. The amount of the cathode active material included in the cathode may be about 80 wt% to about 99 wt%, about 90 wt% to about 99 wt%, or about 95 wt% to about 99 wt%, with respect to the total weight of the cathode active material layer.

The cathode current collector may include, for example, a base film and a metal layer disposed on one side or both (e.g., opposite) sides of the base film. The base film may include, for example, a polymer. The polymer may be, for example, a thermoplastic polymer. The polymer may be, for example, polyethyleneterephtalate (PET), polyethylene (PE), polyprolylene (PP), polybutyleneterephthalate (PBT), polyimide (PI), or any combination thereof. The polymer may be an insulator. Because the base film includes an insulating thermoplastic polymer, the base film is softened or liquefied to block or reduce the operation of a battery in the case of occurrence of a short circuit, so that a rapid current increase may be inhibited. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or any alloy thereof. The metal layer acts as an electrochemical fuse and is cut by an overcurrent, thereby preventing or reducing a short circuit. By controlling a thickness of the metal layer, a limiting current and a maximum current may be adjusted. The metal layer may be plated or deposited on the base film. As the thickness of the metal layer decreases, the limiting current and/or maximum current of the cathode current collector decrease, so that stability of the lithium battery may be improved in the case of a short circuit. A lead tab may be added onto the metal layer for connection with the outside. The lead tab may be welded to the metal layer or a metal layer/base film stack structure by ultrasonic welding, laser welding, spot welding, and/or the like. While the base film and/or the metal layer melts during welding, the metal layer may be electrically connected to the lead tab. A metal chip may further be added between the metal layer and the lead tab for stronger welding between the metal layer and the lead tab. The metal chip may be a chip of the same material as the metal of the metal layer. The metal chip may be, for example, metal foil and metal mesh. The metal chip may be, for example, aluminum foil, copper foil, and SUS foil. By performing welding after disposing the metal chip on the metal layer, the lead tab may be welded to the metal chip/metal layer stack structure or the metal chip/metal layer/base film stack structure. While the base film, the metal layer, and/or the metal chip melt during welding, the metal layer or metal layer/metal chip stack structure may be electrically connected to the lead tab. A metal chip and/or a lead tab may further be added to the metal layer. The base film may have a thickness of, for example, 1 $\mu$m to 50 $\mu$m, 1.5 $\mu$m to 50 $\mu$m, 1.5 $\mu$m to 40 $\mu$m, or 1 to 30 $\mu$m. With the thickness of the base film within the above-described ranges, the weight of the electrode assembly may be more effectively reduced. A melting point of the base film may be, for example, from 100 °C to 300 °C, from 100 °C to 250 °C, or from 100 °C to 200 °C. Because the base film has a melting point within the above-described ranges, the base film melts during a process of welding the lead tab to be easily bound to the lead tab. To improve adhesion between the base film and the metal layer, surface treatment such as corona treatment may be performed on the base film. The thickness of the metal layer may be, for example, from 0.01 $\mu$m to 3 $\mu$m, from 0.1 $\mu$m to 3 $\mu$m, from 0.1 $\mu$m to 2 $\mu$m, or from 0.1 $\mu$m to 1 $\mu$m. With the thickness of the metal layer within the above-described ranges, stability of the electrode assembly may be obtained while maintaining conductivity thereof. The thickness of the metal chip may be, for example, from 2 $\mu$m to 10 $\mu$m, from 2 $\mu$m to 7 $\mu$m, or from 4 $\mu$m to 6 $\mu$m. With the thickness of the metal chip within the above-described ranges, the metal layer may be more easily connected to the lead tab. Because the cathode current collector has the above-described structure, the weight of the cathode may be reduced, so that energy density of the cathode and the lithium battery may be increased.

**Separator**

Next, a separator to be placed between the cathode and the anode may be prepared.

The separator may be any separator commonly utilized in a lithium battery. For example, the separator may be a separator capable of retaining a large quantity of electrolyte solution while exhibiting low resistance to ion migration in electrolyte. For example, the separator may be in the form of non-woven fabric or woven fabric formed of a material selected from among glass fiber, polyester, Teflon, polyethylene, polypropylene, polytetrafluoroethylene (PTFE), or a combination thereof. A lithium ion battery may utilize, for example, a rollable separator formed of polyethylene, polypropylene, and/or the like, and a lithium ion polymer battery may utilize, for example, a separator with excellent or suitable electrolyte impregnating capacity.

The separator may be prepared by the method described as an examples described herein; however, the method by which to prepare the separator is not necessarily limited to this method, and may be adjusted according to conditions required.

First, a separator composition may be prepared by mixing a polymer resin, a filler, and a solvent. The separator composition may be directly coated and dried on top of an electrode to thereby form a separator. In some embodiments, after casting and drying the separator composition on a support, a separator film exfoliated from the support may be laminated on top of an electrode to form a separator.

The polymer utilized in the separator preparation is not limited to any particular polymer and may utilize any polymer available for utilize in a binder of an electrode plate. For example, the polymer may utilize a vinylidene fluoride/hexafluoropropylene copolymer, polyvinylidene fluoride (PVDF), polyacrylonitrile, polymethyl methacrylate, or a mixture thereof.

**Anode**

The anode may contain an anode current collector.

In one or more embodiments, the anode current collector may include, for example, a base film and a metal layer disposed on one side or both (e.g., opposite) sides of the base film. The base film may include, for example, a polymer. The polymer may be, for example, a thermoplastic polymer. The polymer may be, for example, polyethyleneterephtalate (PET), polyethylene (PE), polyprolylene (PP), polybutyleneterephthalate (PBT), polyimide (PI), or any combination thereof. The polymer may be an insulating polymer. Because the base film includes an insulating thermoplastic polymer, the base film is softened or liquefied to block or reduce the operation of a battery in the case of occurrence of a short circuit, so that a rapid current increase may be inhibited. The metal layer may include, for example, copper (Cu), stainless steel, titanium (Ti), iron (Fe), cobalt (Co), nickel (Ni), or an alloy thereof. The metal layer may correspond to, for example, the first metal substrate. The metal layer may further include a coating layer including the second metal.

The anode current collector may further include a metal chip and/or a lead tab. For more detailed descriptions of the base film, the metal layer, the metal chip, and the lead tab of the anode current collector, refer to the cathode current collector. Because the anode current collector has the above-described structure, the weight of the anode may be reduced, and accordingly, energy density of the anode and the lithium battery may be increased.

An anode active material layer may be formed on the anode current collector. The anode active material layer may be formed as a plated or deposited lithium layer after charging. In some embodiments, the anode active material layer may be formed by utilizing an anode active material during battery assembly.

The method by which to prepare the anode active material layer utilizing an anode active material may be the same process as a method of preparing a cathode active material layer, except that an anode active material is utilized instead of a cathode active material utilized to form the cathode active material layer.

The lithium metal battery may further include, for example, a thin film containing an element capable of forming an alloy with lithium on one surface of the anode current collector. The thin film may be positioned between the anode current collector and the anode active material layer. The thin film may include, for example, an element capable of forming an alloy with lithium. Examples of the element capable of forming an alloy with lithium may include gold, silver, zinc, tin, indium, silicon, aluminum, bismuth, and/or the like, but without being limited thereto, any element available in the art that is capable of forming an alloy with lithium may be utilized. The thin film may include (e.g., consist of) one of the aforementioned metals, or may include (e.g., consist of) an alloy of different types (kinds) of metals. Due to the thin film placed on one side of the anode current collector, for example, the plated form of a first anode active material layer plated between the thin film and the anode active material layer may be further flattened, thus further improving cycle characteristics of the lithium metal battery.

## Separator

A separator according to one or more embodiments may be utilized.

The organic electrolyte solution may be prepared by dissolving a lithium salt in an organic solvent.

For the organic solvent, any organic solvent available in the art may be utilized. Examples of the organic solvent may include propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, and mixtures thereof.

The lithium salt may be any lithium salt available in the art. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ ($1 \leq x \leq 20$ and $1 \leq y \leq 20$), LiCl, Lil, or a mixture thereof. The concentration of the lithium salt may be, for example, about 0.1 M to about 5.0 M.

A lithium metal battery according to one or more embodiments may further include a liquid electrolyte, a solid electrolyte, a gel electrolyte, or a combination thereof. Examples of the solid electrolyte may include an oxide-based solid electrolyte, a sulfide-based solid electrolyte, a polymer solid electrolyte, or a combination thereof.

For example, the solid-state electrolyte may be an oxide-based solid-state electrolyte. The oxide-based solid electrolyte may be at least one selected from among $Li_{1+x+y}Al_xTi_{2-x}Si_yP_{3-y}O_{12}$ ($0<x<2$ and $0 \leq y<3$), $Li_3PO_4$, $Li_xTi_y(PO_4)_3$ ($0<x<2$ and $0<y<3$), $Li_xAl_yTi_z(PO_4)_3$ ($0<x<2$, $0<y<1$, and $0<z<3$), $Li_{1+x+y}(Al, Ga)_x(Ti, Ge)_{2-x}Si_yP_{3-y}O_{12}$ ($0 \leq x \leq 1$ and $0 \leq y \leq 1$), $Li_xLa_yTiO_3$ ($0<x<2$ and $0<y<3$), $Li_2O$, LiOH, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (M = Te, Nb, or Zr, and x is an integer of 1 to 10). The solid-state electrolyte may be prepared by a sintering method and/or the like. For example, the oxide-based solid electrolyte may be a garnet-type or kind solid electrolyte selected from among $Li_7La_3Zr_2O_{12}$ (LLZO) and $Li_{3+x}La_3Zr_{2-a}M_aO_{12}$ (M-doped LLZO, M=Ga, W, Nb, Ta, or Al, and x is an integer of 1 to 10).

Examples of the sulfide-based solid-state electrolyte may include lithium sulfide, silicon sulfide, phosphorus sulfide, boron sulfide, or a combination thereof. Sulfide-based solid-state electrolyte particles may include $Li_2S$, $P_2S_5$, $SiS_2$, $GeS_2$, $B_2S_3$, or a combination thereof. The sulfide-based solid-state electrolyte particles may be $Li_2S$ or $P_2S_5$. The sulfide-based solid-state electrolyte particles are suitable to have a higher lithium ion conductivity than that of other inorganic compounds. For example, the sulfide-based solid-state electrolyte may include $Li_2S$ and $P_2S_5$. When sulfide solid electrolyte materials constituting the sulfide-based solid electrolyte include $Li_2S$-$P_2S_5$, a mixing molar ratio of $Li_2S$ and $P_2S_5$ may be, for example, in a range of about 50:50 to about 90:10. In some embodiments, an Inorganic solid electrolyte prepared by adding a material such as $Li_3PO_4$, a halogen, a halogen compound, $Li_{2+2x}Zn_1$-$GeO_4$ ""LISICO"", $0 \leq x<1$), $Li_{3+y}PO_{4-x}N_x$ ""LIPO"", $0<x<4$ and $0<y<3$), $Li_{3.25}Ge_{0.25}P_{0.75}S_4$ ""Thio-LISICO""), and $Li_2O$-$Al_2O_3$-$TiO_2$-$P_2O_5$ ""LAT"") to an inorganic solid electrolyte of $Li_2S$-$P_2S_5$, $SiS_2$, $GeS_2$, $B_2S_3$, or a combination thereof, may be utilized as a sulfide solid electrolyte. Non-limiting examples of the sulfide solid electrolyte materials may include $Li_2S$-$P_2S_5$; $Li_2S$-

$P_2S_5$-LiX (X=a halogen element); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_3$-LiI; $Li_2S$-$SiS_2$-$P_2S_5$-LiI; $Li_2S$-$B_2S_3$; $Li_2S$-$P_2S_5$-$Z_mS_n$ (0<m<10, 0<n<10, and Z=Ge, Zn or Ga); $Li_2S$-$GeS_2$; $Li_2S$-$SiS_2$-$Li_3PO_4$; and $Li_2S$-$SiS_2$-$Li_pMO_q$ (0<p<10, 0<q<10, and M=P, Si, Ge, B, Al, Ga, or In). In this regard, the sulfide-based solid electrolyte material may be prepared by subjecting a starting material (e.g., $Li_2S$, $P_2S_5$, etc.) of the sulfide-based solid electrolyte material to a treatment such as melt quenching, mechanical milling, and/or the like. In some embodiments, a calcination process may be performed following the above treatment. The sulfide-based solid electrolyte may be amorphous or crystalline, or may be in a mixed state thereof.

The polymer solid electrolyte may include, for example, a mixture of a lithium salt and a polymer or a polymer having an ion-conductive functional group. The polymer solid electrolyte may be, for example, a polymer electrolyte in a solid state at 25 °C and 1 atm. For example, the polymer solid electrolyte may not include (e.g., may exclude) a (e.g., any) liquid. The polymer solid electrolyte includes a polymer, and examples of the polymer include polyethyleneoxide (PEO), polyvinylidenefluoride (PVDF), vinylidene fluoride-hexafluoropropylene (PVDF-HFP), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion, Flemion, Gore, Aciplex, Morgane ADP), sulfonated poly(ether ether ketone) (SPEEK), sulfonated poly(arylene ether ketone ketone sulfone) (SPAEKKS), sulfonated poly(aryl ether ketone (SPAEK), poly[bis(benzimidazobenzisoquinolinones)] (SPBIBI), poly(styrene sulfonate) (PSS), lithium 9,10-diphenylanthracene-2-sulfonate (DPASLi+), or any combination thereof. However, the embodiment is not limited thereto, and any polymer electrolytes commonly available in the art may also be utilized. Any lithium salts commonly available in the art may also be utilized. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x}+1SO_2)(C_yF_{2y}+1SO_2)$ (where x and y may each independently be from 1 to 20), LiCl, LiI, or any mixture thereof. The polymer included in the polymer solid electrolyte may be, for example, a compound including 10 or more, 20 or more, 50 or more, or 100 or more repeating units. A weight average molecular weight of the polymer included in the polymer solid electrolyte may be, for example, 1000 Dalton (Da) or more, 10,000 Da or more, 100,000 Da or more, or 1,000,000 Da or more. The gel electrolyte is, for example, a polymer gel electrolyte. For example, the gel electrolyte may have a gel state without including a polymer.

The polymer gel electrolyte may include, for example, a liquid electrolyte and a polymer, or an organic solvent and a polymer having an ion-conductive functional group. The polymer gel electrolyte may be, for example, a polymer electrolyte in a gel state at 25 °C and 1 atm. The polymer gel electrolyte may have, for example, a gel state without including a liquid. The liquid electrolyte utilized in the polymer gel electrolyte may be, for example, a mixture of an ionic liquid, a lithium salt, and an organic solvent; a mixture of a lithium salt and an organic solvent; a mixture of an ionic liquid and an organic solvent; or a mixture of a lithium salt, an ionic liquid, and an organic solvent. The polymer utilized in the polymer gel electrolyte may be selected from among polymers utilized in the polymer solid electrolyte. The organic solvent may be selected from among organic solvents utilized in liquid electrolytes. The lithium salt may be selected from among lithium salts utilized in polymer solid electrolyte. The ionic liquid refers to a salt in a liquid state, and a molten salt at room temperature composed solely of ions and having a melting point room temperature. The ionic liquid may include, for example, at least one compound selected from among a) at least one cation selected from among ammonium, pyrimidium, pyridinium, pyrimidium, imidazolium, piperidinium, pyrazolium, oxazolium, pyridazinium, phosphonium, sulfonium, triazole, and any mixture thereof, and b) at least one anion selected from among $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $BF_4^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. For example, the polymer solid electrolyte may be impregnated with a liquid electrolyte in a secondary battery to form a polymer gel electrolyte. The polymer gel electrolyte may further include inorganic particles. The polymer included in the polymer gel electrolyte may be a compound including, for example, 10 or more, 20 or more, 50 or more, or 100 or more repeating units. A weight average molecular weight of the polymer included in the polymer gel electrolyte may be, for example, 500 Da or more, 1000 Da or more, 10,000 Da or more, 100,000 Da or more, or 1,000,000 Da or more.

**Lithium Metal Battery**

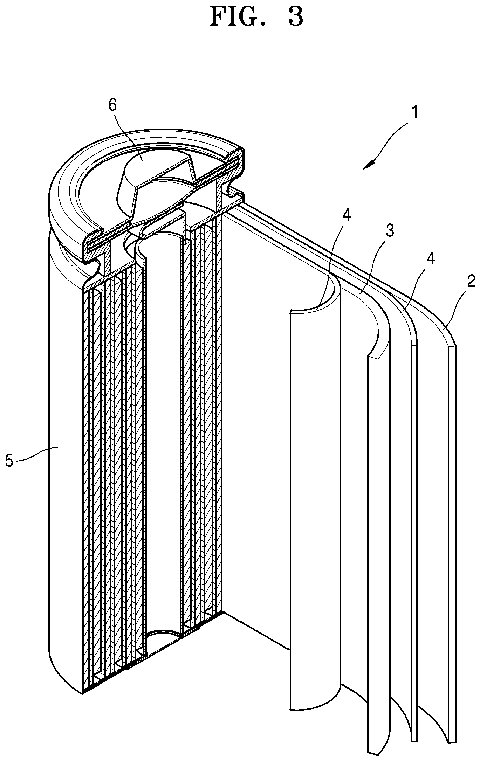

Referring to FIG. 3, a lithium metal battery 1 according to one or more embodiments may include a cathode 3, an anode 2 according to one or more embodiments, and a separator 4.

The anode 2 may include an anode current collector alone or may include an anode current collector and an anode active material layer. In some embodiments, the separator 4 may include a separator according to one or more embodiments, the separator may include a porous substrate and a ceramic coating layer disposed on one surface of the porous substrate, the ceramic coating layer may be positioned so as to face the anode current collector, and a gel-type or kind polymer electrolyte may be included in pores in the porous substrate.

The cathode 3, the anode 2, and the separator 4 may be wound or folded to form a battery structure 7. The battery structure 7 thus formed may be accommodated in a battery case 5. The battery case 5 may be injected with an organic electrolyte solution and sealed with a cap assembly 6, thereby completing the preparation of the lithium metal battery 1. The battery case 5 may have a cylindrical shape, but is not necessarily limited thereto and may have a polygonal shape, a thin-film shape, and/or the like.

Referring to FIG. 3, the lithium metal battery 1 according to one or more embodiments may include the cathode 3, the anode 2, and the separator 4. The separator 4 may be disposed between the cathode 3 and the anode 2, and the cathode 3, the anode 2, and the separator 4 may be wound or folded to form a battery structure. The battery structure thus formed may be accommodated in the battery case 5. An electrode tab, acting as an electrical path for guiding an electrical current generated in the battery structure to the outside, may be included. The battery case 5 may be injected with an organic electrolyte solution and sealed, thereby completing the preparation of the lithium metal battery 1. The battery case 5 may have a polygonal shape, but without being necessarily limited thereto, may also have a cylindrical shape, a thin-film shape, and/or the like, for example.

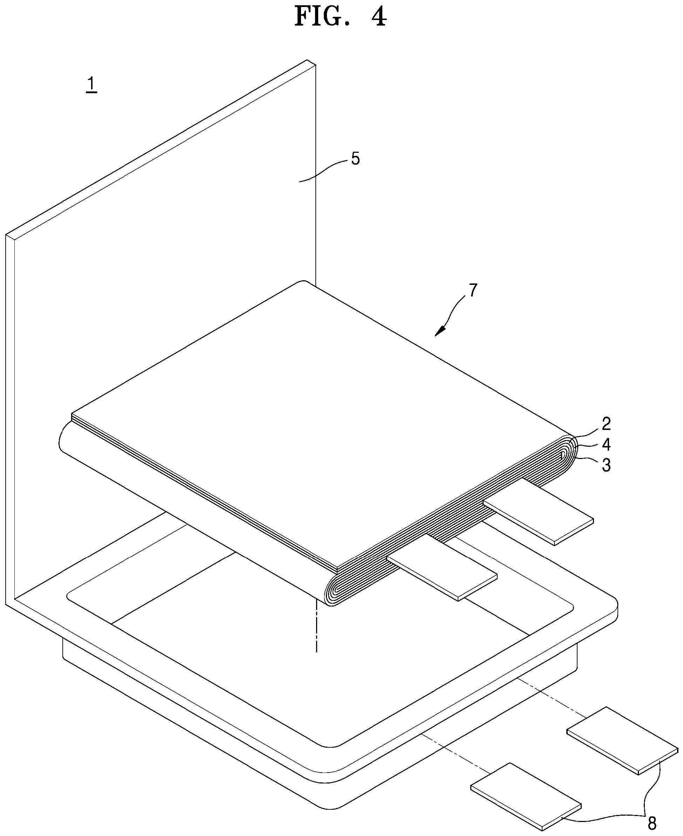

Referring to FIG. 4, a lithium metal battery 1 according to one or more embodiments may include a cathode 3, an anode 2 according to one or more embodiments, and a separator 4.

The anode 2 may include an anode current collector alone or may include an anode current collector and an anode active material layer. In some embodiments, the separator 4 may include a separator according to one or more embodiments, the separator may include a porous substrate and a ceramic coating layer disposed on one surface of the porous substrate, the ceramic coating layer may be positioned so as to face the anode current collector, and a gel-type or kind polymer electrolyte may be included in pores in the porous substrate.

The separator 4 may be disposed between the cathode 3 and the anode 2 to form a battery structure. The battery structure 7 may be stacked in a bi-cell structure and then accommodated into the battery case 5. An electrode tab 8, acting as an electrical path for guiding an electrical current generated in the battery structure 7 to the outside, may be included. The battery case 5 may be injected with an organic electrolyte solution and sealed, thereby completing the preparation of the lithium metal battery 1. The battery case 5 may have a polygonal shape, but without being necessarily limited thereto, may also have a cylindrical shape, a thin-film shape, and/or the like, for example.

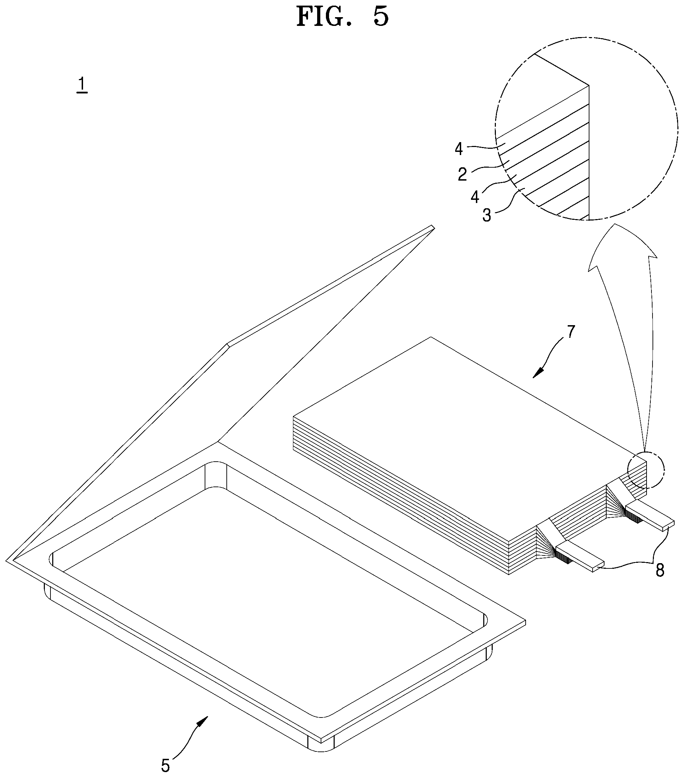

A pouch-type or kind lithium metal battery corresponds to the lithium metal battery shown in FIGS. 4 and 5 utilizing a pouch as a battery case. A pouch-type or kind lithium metal battery may include one or more battery structures. A separator may be placed between a cathode and an anode to thereby form a battery structure. The battery structures may be stacked in a bi-cell structure, and immersed in an organic electrolyte solution, and then accommodated and sealed in a pouch, thereby completing the preparation of a pouch-type or kind lithium metal battery. For example, although not illustrated in the drawings, the cathode, anode, and separator described above may be simply stacked in the form of an electrode assembly and then accommodated in a pouch, or may be wound or folded into a jelly roll-type or kind electrode assembly and then accommodated in a pouch. Subsequently, the pouch may be injected with an organic electrolyte solution and then sealed, thereby completing the preparation of a lithium metal battery.

The lithium metal battery disclosed herein has excellent or suitable discharge capacity and lifespan characteristics, and has high energy density, and thus may be utilized in an electric vehicle (EV), for example. For example, the lithium metal battery may be utilized in a hybrid vehicle, such as a plug-in hybrid electric vehicle (PHEV) and/or the like. Also, the lithium metal battery may be utilized in any suitable field that requires a large amount of energy storage. For example, the lithium metal battery may be utilized in an electric bicycle, a power tool, and/or the like.

Multiple units of the lithium metal battery may be stacked to form a battery module, and multiple units of such a battery module may form a battery pack. Such a battery pack may be utilized in all types (kinds) of devices that require high capacity and high output. For example, the battery pack may be utilized in a laptop computer, a smartphone, an electric vehicle, and/or the like. The battery module may include, for example, a plurality of batteries and a frame holding the batteries. The battery pack may include, for example, a plurality of battery modules and a bus bar connecting these battery modules. The battery module and/or the battery pack may further include a cooling device. A plurality of battery packs may be controlled or selected by a battery management system. The battery management system may include a battery pack, and a battery control device connected to the battery pack.

**Method of Preparing Lithium Metal Battery**

A lithium metal battery according to one or more embodiments may be prepared by preparing an anode current collector; forming a separator by forming a ceramic coating layer on one side of the porous substrate; preparing a cathode; arranging the separator on the anode current collector such that the ceramic coating layer faces the anode current collector; forming a battery structure by arranging the anode current collector, the separator, and the cathode; accommodating the battery structure in a battery case and injecting the battery structure with a gel-type or kind polymer electrolyte forming composition; and forming a gel-type or kind polymer electrolyte by curing the gel-type or kind polymer electrolyte forming composition.

The ceramic coating layer may be formed utilizing a ceramic coating layer forming composition. The ceramic coating layer forming composition may be obtained by mixing small-diameter inorganic particles, large-diameter inorganic particles, and a solvent to obtain a dispersion of inorganic particles, and adding a binder thereto.

In the ceramic coating layer forming composition, the amount of solids may be about 20 parts by weight to about 30 parts by weight, and the amount of the remaining materials in the composition may be about 70 parts by weight to about 80 parts by weight.

Organic solvent may be evaporated through drying after coating of the coating composition, and therefore absent in the finally obtained coating layer of the separator. For the organic solvent, N-methyl pyrrolidone, acetone, or water, etc. may be utilized. However, the organic solvent is not limited to the aforementioned examples and may be any solvent available in the art. For example, acetone may be utilized as the organic solvent.

For the injection of the gel-type or kind polymer electrolyte forming composition into the battery structure, an impregnation process may be performed under vacuum to ensure sufficient infiltration of the composition into the pores in the porous substrate.

The method by which to form a gel-type or kind polymer electrolyte may include methods such as curing by heat, UV, or high-energy radiation (electron beam, γ ray). A curing reaction utilizing heat may be carried out at a temperature of about 40 °C to about 120 °C, for example, about 50 °C to about 90 °C, for about 30 minutes to about 120 minutes.

This thermal treatment, although it depends on the type or kind of crosslinkable monomer and/or the like, may be performed at a temperature of about 40 °C to about 120 °C, for example. When the thermal treatment is performed within the above ranges, it may be possible to provide a lithium metal battery with improved lifespan characteristics, in which dendrite formation is inhibited and electrolyte wettability is improved by utilizing a separator containing the gel-type or kind polymer electrolyte in the pores in the porous substrate.

The present disclosure will be described in greater detail through the following examples and comparative examples. However, it will be understood that the examples are provided only to illustrate the present disclosure and not to be construed as limiting the scope of the present disclosure.

**Example 1**

Alumina having an average particle diameter (D50) of about 200 nm as small-diameter inorganic particles and alumina having an average particle diameter (D50) of about 1 μm as large-diameter inorganic particles were mixed in a weight ratio of 2:8, and water was added to the mixture to produce an aqueous dispersion of inorganic particles. In the dispersion of inorganic particles, the total amount of alumina having an average particle diameter (D50) of about 200 nm and alumina having an average particle diameter (D50) of about 1 μm was 30 parts by weight.

By adding carboxylmethylcellulose (CMC) as a binder to the aqueous dispersion of inorganic particles, a ceramic coating layer forming composition was prepared. Here, the amount of the CMC was 5 parts by weight and the total weight of the inorganic particles was 95 parts by weight.

On a cross-section of a 5.5 μm-thick polyethylene monolayer substrate film utilized as a porous substrate, the prepared ceramic coating layer composition was coated by a gravure coating method and then dried at a drying temperature of 70 °C and a wind speed of 15 m/sec for 10 seconds to thereby produce a separator having a ceramic coating layer (coating thickness: 2 μm).

The total thickness of the separator having the ceramic coating layer was 7.5 μm.

A 10 μm-thick copper foil as anode current collector was stacked on the ceramic coating layer of the separator, a cathode was stacked on the other side of the separator, and the resulting stack was accommodated in a battery case. Then, the resulting structure was injected with a gel polymer electrolyte forming composition and heat-treated at 70 °C for 120 minutes to thereby produce a lithium metal battery having a gel polymer electrolyte formed in pores in the separator.

The gel polymer electrolyte forming composition was prepared by mixing trimethylolpropane trimethacrylate (TMPTMA) as a crosslinkable monomer, 1.3 M $LiPF_6$ dissolved in a mixed solvent of ethylene carbonate (EC), dimethyl carbonate (DMC), and ethyl methyl carbonate (EMC) (weight ratio of 1:1:0.5) as an electrolyte, and benzoin ethyl ether (Sigma-Aldrich, 240.30 g/mol) as an initiator. The composition included 5 parts by weight of the crosslinkable monomer and 95 parts by weight of the electrolyte with respect to 100 parts by weight of the total weight of the composition, and the initiator was utilized in an amount of 5 parts by weight with respect to 100 parts by weight of the crosslinkable monomer.

The cathode was prepared as follows.

After uniformly mixing $Li_{1.04}Ni_{0.8}Co_{0.1}Al_{0.1}O_2$ powder and a carbonaceous conductive material (Super-P; Timcal Ltd.) in a weight ratio of 90:5, a polyvinylidene fluoride (PVDF) binder solution was added to the mixture such that a cathode active material slurry in which the weight ratio of active material:carbonaceous conductive material:binder becomes 90:5:5, was prepared.

The prepared slurry was coated on a 15 μm-thick aluminum substrate utilizing a doctor blade, and dried under a reduced pressure at 120 °C, and then rolled into a sheet form by utilizing a roll press to prepare a cathode.

The lithium metal battery includes anode current collector/separator (ceramic coating layer/porous substrate)/cathode, and the gel-type or kind polymer electrolyte was contained in the pores in the separator.

**Example 2**

A lithium metal battery was prepared utilizing the same process as in Example 1, except that, when forming the ceramic coating layer, the mixing weight ratio of alumina having an average particle diameter (D50) of about 200 nm to alumina having an average particle diameter (D50) of about 1 $\mu$m as large- diameter inorganic particles was changed from 1:4 in weight ratio to 1:1 in weight ratio.

**Example 3**

A lithium metal battery was prepared utilizing the same process as in Example 1, except that, when forming the ceramic coating layer, the mixing weight ratio of alumina having an average particle diameter (D50) of about 200 nm to alumina having an average particle diameter (D50) of about 1 $\mu$m as large- diameter inorganic particles was changed from 1:4 in weight ratio to 1:8 in weight ratio.

**Example 4**

A lithium metal battery was prepared utilizing the same process as in Example 1, except that, when forming the ceramic coating layer, a mixture of alumina having an average particle diameter (D50) of about 200 nm and silica having an average particle diameter (D50) of about 300 nm in 1:1 weight ratio was utilized as small-diameter inorganic particles, and a mixture of alumina having an average particle diameter (D50) of about 1 $\mu$m and silica having an average particle diameter (D50) of about 1 $\mu$m in 1:1 weight ratio was utilized as large- diameter inorganic particles. In Example 4, the mixing weight ratio of the small-diameter inorganic particles to the large-diameter inorganic particles was 2:8.

**Example 5**

A lithium metal battery was prepared utilizing the same process as in Example 4, except that the mixing weight ratio of small- diameter inorganic particles to large-diameter inorganic particles was changed from 2:8 to 1:1.

**Comparative Example 1**

A 10 $\mu$m-thick copper foil as an anode current collector was stacked on a cross-section of a 5.5 $\mu$m-thick polyethylene monolayer substrate film utilized as a porous substrate, and a cathode was stacked on the other side of the separator. The resulting stack was accommodated in a battery case, and the battery case was injected with the gel-type or kind polymer electrolyte forming composition of Example 1 and heat-treated at 70 °C for 120 minutes to produce a lithium metal battery.
As a cathode, the same cathode as in Example 1 was utilized.
The lithium metal battery included anode current collector/separator(ceramic coating layer/porous substrate)/cathode, and the separator contained electrolyte in the pores.

**Comparative Example 2**

A lithium metal battery was prepared utilizing the same process as in Example 1, except that the ceramic coating layer of the separator was disposed on the cathode, and a copper foil as an anode current collector was placed on the other side of the separator.

**Comparative Example 3**

A lithium metal battery was prepared utilizing the same process as in Example 1, except that the ceramic coating layer was formed on both (e.g., opposite) sides of the porous substrate of the separator.

**Evaluation Example 1: Room Temperature (25 °C) Lifespan**

Charge and discharge characteristics of the lithium metal batteries of Examples 1 to 5 and Comparative Examples 1 to 3 were evaluated under the conditions as follows.
Each battery was charged at 25 °C at a constant current of 0.1 C rate until the battery voltage reached 4.3 V (vs. Li) and then, the charging was cut off at a current of 0.05 C rate while maintaining 4.25 V in a constant voltage mode. Subsequently, each battery was discharged at a constant current of 0.1 C rate until the battery voltage reached 3.6 V (vs. Li) during discharge (formation cycle).

The lithium metal batteries after the formation cycle were each charged at a constant current of 0.2 C rate at 25 °C until the voltage reached 4.3 V (vs. Li) and then, the charging was cut-off at a current of 0.05 C rate while maintaining 4.3 V in a constant voltage mode. Subsequently, each battery was discharged at a constant current of 0.5 C rate until the battery voltage reached 3.6 V (vs. Li) during discharge (1st cycle). The above cycle was repeated under the same conditions up to the 200th cycle (repeated 200 times).

Throughout the charge-discharge cycles above, a rest period of 10 minutes was provided after each charge/discharge cycle. A part of the room temperature charge/discharge test results is shown in Table 1. Capacity retention ratio is defined by Equation 1.

## Equation 1

$$\text{Capacity Retention Ratio [\%]} = [\text{Discharge Capacity at 200}^{th}\text{ cycle /}$$

$$\text{Discharge Capacity at 1}^{st}\text{ cycle}] \times 100$$

Table 1

| Item | Capacity Retention Ratio (%) |
|---|---|
| Example 1 | 73 |
| Example 2 | 68 |
| Example 3 | 70 |
| Example 4 | 67 |
| Example 5 | 65 |
| Comparative Example 1 | 58 |
| Comparative Example 2 | 56 |
| Comparative Example 3 | 60 |

As shown in Table 1, the lithium metal battery of Comparative Example 1 shows a decrease in capacity retention ratio due to side reactions between lithium and the electrolyte following the growth of dendrites, and the lithium metal battery of Comparative Example 2 shows degradation in capacity retention ratio due to side reactions at the cathode interface and dendrites formation at the anode. In some embodiments, the lithium battery of Comparative Example 3 shows a reduced capacity retention ratio due to an occurrence of substantially continuous side reactions caused by overvoltage.

In some embodiments, the lithium metal batteries of Examples 1 to 5 show improved capacity retention ratios, unlike the lithium metal batteries of Comparative Examples 1 to 3. These improved capacity retention ratios may be attributed to the fact that the ceramic coating layer being positioned to face the anode current collector serves to physically inhibit dendrite growth and therefore improves long-term lifespan characteristics of the lithium metal battery.

In some embodiments, according to Comparative Example 2 in which the ceramic coating layer is formed on both (e.g., opposite) sides of the porous substrate and the ceramic coating layer is in contact with the cathode, the ceramic coating layer in this case was found to present a disadvantage to crosslinking of the gel-type or kind polymer electrolyte. This result may be attributed to the fact that side reactions with moisture at the cathode interface due to hygroscopic properties of the inorganic particles of the ceramic coating layer led to deterioration of long-term lifespan characteristics. In some embodiments, application of the ceramic coating layer to both (e.g., opposite) sides of the separator as in Comparative Example 3 leads to increased overvoltage due to an increase in the overall resistance of the cell, deterioration of long-term lifespan, and a decrease volumetric energy density.

**Evaluation Example 2: High-Temperature (45 °C) Lifespan**

Charge/discharge characteristics of the lithium metal batteries of Examples 1 to 5 and Comparative Examples 1 to 3 were evaluated under the conditions as follows.

Each battery was charged at 45 °C at a constant current of 0.1 C rate until the battery voltage reached 4.3 V (vs. Li) and then, the charging was cut off at a current of 0.05 C rate while maintaining 4.25 V in a constant voltage mode. Subsequently, each battery was discharged at a constant current of 0.1 C rate until the voltage reached 3.6 V (vs. Li) during discharge (formation cycle).

The lithium metal batteries after the formation cycle were each charged at a constant current of 0.2 C rate at 25 °C until the voltage reached 4.3 V (vs. Li) and then, the charging was cut-off at a current of 0.05 C rate while maintaining 4.3 V in a constant voltage mode. Subsequently, each battery was discharged at a constant current of 0.5 C rate until the battery voltage reached 3.6 V (vs. Li) during discharge (1st cycle). The above cycle was repeated under the same conditions up to the 160th cycle.

Throughout the charge-discharge cycles above, a rest period of 10 minutes was provided after each charge/discharge cycle. A part of the high-temperature charge/discharge test results is shown in Table 2.

Table 2

| Item | Capacity retention ratio (%) |
|---|---|
| Example 1 | 82 |
| Example 2 | 75 |
| Example 3 | 76 |
| Example 4 | 75 |
| Example 5 | 73 |
| Comparative Example 1 | 70 |
| Comparative Example 2 | 68 |
| Comparative Example 3 | 71 |

As shown in Table 2, it was found that the lithium metal batteries of Examples 1 to 5 had improved high-temperature lifespan compared to the lithium metal batteries of Comparative Examples 1-3.

**Evaluation Example 3: Initial Capacity**

The lithium metal batteries of Examples 1 to 5 and Comparative Example 3 were cycled under the conditions as follows.

Each battery was charged at 25 °C at a constant current of 0.1 C rate until the battery voltage reached 4.3 V (vs. Li) and then, the charging was cut off at a current of 0.05 C rate while maintaining 4.25 V in a constant voltage mode. Subsequently, each battery was discharged at a constant current of 0.1 C rate until the battery voltage reached 3.0 V (vs. Li) during discharge (formation cycle).

The lithium metal batteries after the formation cycle were each charged at a constant current of 0.2 C rate at 25 °C until the voltage reached 4.3 V (vs. Li) and then, the charging was cut-off at a current of 0.05 C rate while maintaining 4.3 V in a constant voltage mode. Subsequently, each battery was discharged at a constant current of 0.2 C rate until the battery voltage reached 3.0 V (vs. Li) during discharge (1st cycle).

Initial capacities were investigated and are shown in Table 3.

Table 3

| Item | Initial Capacity (mAh/g) |
|---|---|
| Example 1 | 196.9 |
| Example 2 | 195.8 |
| Example 3 | 196.0 |
| Example 4 | 195.5 |
| Example 5 | 195.1 |
| Comparative Example 3 | 189.2 |

As shown in Table 3, the lithium metal batteries of Examples 1 to 5 due to a decrease in interface resistance, each show an improved initial capacity compared to the lithium metal battery of Comparative Example 3. When silica was utilized as the inorganic particles (Examples 4 and 5), the lithium metal batteries showed a relatively increased resistance and therefore a decreased capacity compared to Examples 1 and 2.

In some embodiments, the lithium metal battery of Comparative Example 3, due to having the ceramic coating layer on both (e.g., opposite) sides of the porous substrate, shows the largest resistance and therefore, the smallest initial capacity.

The terminology utilized herein is utilized to describe embodiments only, and is not intended to limit the present disclosure. The singular expression includes the plural expression unless the context clearly dictates otherwise.

As utilized herein, "combination thereof" refers to a mixture, laminate, composite, copolymer, alloy, blend, reaction product, and/or the like of the constituents.

In the drawings, the thickness of layers, films, panels, regions, etc., are exaggerated for clarity and like reference numerals designate like elements throughout, and duplicative descriptions thereof may not be provided the specification. It will be understood that if (e.g., when) an element such as a layer, film, region, or substrate is referred to as being "on" another element, it can be directly on the other element or intervening element(s) may also be present. In contrast, if (e.g., when) an element is referred to as being "directly on" another element, there are no intervening elements present.

In some embodiments, "layer" herein includes not only a shape formed on the whole surface when viewed from a plan view, but also a shape formed on a partial surface.

Herein, "or" is not to be construed as an exclusive meaning, for example, "A or B" is construed to include A, B, A+B, and/or the like.

As used herein, the term "substantially," "about," and similar terms are used as terms of approximation and not as terms of degree, and are intended to account for the inherent deviations in measured or calculated values that would be recognized by those of ordinary skill in the art. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within $\pm$ 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

As used herein, the terms "use," "using," and "used" may be considered synonymous with the terms "utilize," "utilizing," and "utilized," respectively.

The use of "may" when describing embodiments of the present disclosure refers to "one or more embodiments of the present disclosure."

As used herein, the singular forms "a", "an" and "the" are intended to include the plural forms as well, unless the context clearly indicates otherwise.

In the present disclosure, if (e.g., when) particles are spherical, "size" or "particle diameter" indicates a particle diameter or an average particle diameter, and if (e.g., when) the particles are non-spherical, the "size" or "particle diameter" indicates a major axis length or an average major axis length. That is, if (e.g., when) particles are spherical, "particle diameter" indicates a particle diameter, and when the particles are non-spherical, the "particle diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

As used herein, expressions such as "at least one of", "one of", and "selected from", when preceding a list of elements, modify the entire list of elements and do not modify the individual elements of the list. For example, "at least one of a, b or c", "at least one selected from a, b and c", etc., may indicate only a, only b, only c, both (e.g., simultaneously) a and b, both (e.g., simultaneously) a and c, both (e.g., simultaneously) b and c, all of a, b, and c, or variations thereof.

The vehicle, a battery control device, a management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the disclosure as defined by the following claims and equivalents thereof.

## Claims

1. A lithium metal battery comprising:

   an anode current collector;
   a cathode; and
   a separator between the anode current collector and the cathode,
   wherein the lithium metal battery either
   comprises an anode active material layer, the anode active material layer being between the anode current collector and the separator, or
   is free of the anode active material layer, the separator comprises: a porous substrate; and a ceramic coating layer on a side of the porous substrate,
   the ceramic coating layer is positioned to face the anode current collector, and
   pores in the porous substrate comprise a gel-type polymer electrolyte.

2. The lithium metal battery of claim 1, wherein the ceramic coating layer comprises large-diameter inorganic particles and small-diameter inorganic particles, the small-diameter inorganic particles have an average particle diameter of about 50 nm to about 500 nm, and the large-diameter inorganic particles have an average particle diameter of about 1 $\mu$m to about 10 $\mu$m, and/or
   a mixing weight ratio of the large-diameter inorganic particles to the small-diameter inorganic particles in the ceramic coating layer is about 9:1 to about 1:1.

3. The lithium metal battery of claim 2, wherein each of the large-diameter inorganic particles and the small-diameter inorganic particles comprises $SiO_2$, $Al_2O_3$, $Al(OH)_3$, $AlO(OH)$, $TiO_2$, $BaTiO_3$, $ZrO_2$, $ZnO_2$, $Mg(OH)_2$, aluminum nitride (AIN), silicon carbide (SiC), boron nitride (BN), $BaTiOs$, $BaTiOs$, $Pb(Zr,Ti)O_3$ (PZT), $Pb_{1-a}La_aZr_{1-b}Ti_bO_3$ (PLZT, 0<a<1 and 0<b<1), $Pb(Mg_{1/3}Nb_{2/3})O_3$-$PbTiO_3$ (PMN-PT), hafnia ($HfO_2$), $SrTiOs$, $SnO_2$, $CeO_2$, MgO, NiO, CaO, ZnO, $ZrO_2$, $Y_2O_3$, $Al_2O_3$, $TiO_2$, SiC, lithium phosphate ($Li_3PO_4$), lithium titanium phosphate ($Li_cTi_d(PO_4)_3$, 0<d<2, and 0<d<3), lithium aluminum titanium phosphate ($Li_{a1}Al_{b1}Ti_{c1}(PO_4)_3$, 0<a1<2, 0<b1<1, and 0<c1<3), $14Li_2O$-$9Al_2O_3$-$38TiO_2$-$39P_2O_5$, $(LiAlTiP)_{a2}O_{b2}$ type glass (0<a2<4 and 0<b2<13), lithium lanthanum titanate ($Li_{a3}La_{b3}TiO_3$, 0<a3<2 and 0<b3<3), $Li_{3.25}Ge_{0.25}P_{0.75}S_4$, $Li_{a4}Ge_{b4}P_{c2}S_d$, 0<a4<4, 0<b4<1, 0<c2<1, and 0<d<5), LisN, lithium nitride ($Li_{a5}N_{b5}$, 0<a5<4, and 0<b5<2), $Li_3PO_4$-$Li_2S$-$SiS_2$, $SiS_2$ type glass ($Li_{a6}Si_{b6}S_{c3}$, 0<a6<3, 0<b6<2, and 0<c4<4), $LiI$-$Li_2S$-$P_2S_5$, $P_2S_5$ type glass ($Li_{a7}P_{b7}S_{c5}$, 0<a7<3, 0<b7<3, and 0<c5<7), or a combination thereof.

4. The lithium metal battery of claim 2,

   wherein the small-diameter inorganic particles have an average particle diameter of about 50 nm to about 500 nm, and
   the large-diameter inorganic particles have an average particle diameter of about 1 $\mu$m to about 10 $\mu$m.

5. The lithium metal battery of any of the claims 1 to claim 4, wherein the gel-type polymer electrolyte comprises a crosslinked polymer and a liquid electrolyte, the liquid electrolyte comprising an organic solvent and a lithium salt.

6. The lithium metal battery of any of the claims 1 to 5,

wherein the crosslinked polymer is a polymerization product of a crosslinkable monomer, and
the crosslinkable monomer comprises trimethylolpropane trimethacrylate (TMPTMA), diethylene glycol diacrylate (DEGDA), diethylene glycol dimethacrylate (DEGDMA), triethylene glycol diacrylate (TEGDA), triethylene glycol dimethacrylate (TEGDMA), tetraethylene glycol diacrylate (TTEGDA), glycidyl methacrylate, polyethylene glycol diacrylate (PEGDA), polyethylene glycol dimethacrylate (PEGDMA), polypropylene glycol diacrylate (PPGDA) ), dipropylene glycol diacrylate (DPGDA), tripropylene glycol diacrylate (TPGDA), dianol diacrylate (DDA), dianol dimethacrylate (DDMA), ethoxylated trimethylolpropane triacrylate (ETPTA), acrylate-functionalized ethylene oxide, butanediol dimethacrylate, ethoxylated neopentyl glycol diacrylate (NPEOGDA), propoxylated neopentyl glycol diacrylate (NPPOGDA), trimethylolpropane triacrylate (TMPTA), trimethylolpropane trimethacrylate (TMPTMA), pentaerythritol triacrylate (PETA), ethoxylated propoxylated trimethylolpropane triacrylate (TMPEOTA)/(TMPPOTA), propoxylated glyceryl triacrylate, tris(2-hydroxyethyl) isocyanurate triacrylate (THEICTA), pentaerythritol tetraacrylate (PETTA), dipentaerythritol pentaacrylate (DPEPA), di(trimethylolpropane) tetraacrylate (DTMPTTA), a diglycidyl ester, diallyl suberate, an acrylamide, a divinylbenzene, or a combination thereof, and
an amount of the crosslinked polymer in the gel-type polymer electrolyte is about 1 part by weight to about 20 parts by weight with respect to 100 parts by weight of the gel-type polymer electrolyte.

7. The lithium metal battery of any of the claims 1 to claim 6, wherein the ceramic coating layer has a thickness of about 10 nm to about 5,000 nm,

wherein the ceramic coating layer further comprises a binder, and
wherein the binder comprises polyvinylidene fluoride, polyvinyl alcohol, carboxymethylcellulose (CMC), starch, hydroxypropylcellulose, regenerated cellulose, polyvinylpyrrolidone, tetrafluoroethylene, polyethylene, polypropylene, ethylenepropylene-diene terpolymer (EPDM), sulfonated EPDM, styrene butyrene rubber, an acrylic polymer, fluoro rubber, or a combination thereof.

8. The lithium metal battery of any of the claims 1 to claim 7,

further comprising an anode active material layer between the anode current collector and the ceramic coating layer,
wherein the anode active material layer has a thickness of about 1 $\mu$m to about 500 $\mu$m.

9. The lithium metal battery of claim 8,

wherein the anode material layer comprises a lithium metal foil, lithium metal powder, a foil of a lithium alloy, powder of a lithium alloy, or a combination thereof, and
the lithium alloy comprises lithium and a first metal, and the first metal comprises indium (In), silicon (Si), gallium (Ga), tin (Sn), aluminum (Al), titanium (Ti), zirconium (Zr), niobium (Nb), germanium (Ge), antimony (Sb), bismuth (Bi), gold (Au), platinum (Pt), palladium (Pd), magnesium (Mg), silver (Ag), zinc (Zn), nickel (Ni), iron (Fe), cobalt (Co), chromium (Cr), cesium (Cs), sodium (Na), potassium (K), calcium (Ca), yttrium (Y), bismuth (Bi), tantalum (Ta), hafnium (Hf), barium (Ba), vanadium (V), strontium (Sr), lanthanum (La), or a combination thereof.

10. The lithium metal battery of claim 8,

wherein the anode active material layer comprises an anode active material, and
the anode active material comprises: a carbonaceous compound; a mixture of a carbonaceous compound and at least one selected from among a metal and a metalloid; a composite of the carbonaceous compound and at least one selected from among a metal and a metalloid; or a combination thereof, preferably,
wherein the carbonaceous compound comprises amorphous carbon, and
the carbonaceous compound comprises carbon black, carbon nanotubes, carbon nanofibers, fullerenes, activated carbon, carbon fibers, or a combination thereof.

11. The lithium metal battery of any of the claims 1 to claim 10,

wherein the porous substrate comprises polypropylene, polyethylene, polyethylene terephthalate, polybutylene terephthalate, polyester, polyacetal, polyamide, polyimide, polycarbonate, polyetheretherketone, polyaryletherketone, polyetherimide, polyamideimide, polybenzimidazole, polyethersulfone, polyphenylene oxide, a cyclic olefin copolymer, polyphenylene sulfide, polyethylene naphthalene, or a combination thereof.

12. The lithium metal battery of any of the claims 1 to claim 11, wherein the electrolyte comprises a liquid electrolyte, a solid electrolyte, a gel electrolyte or a combination thereof, optionally, the electrolyte comprises the solid electrolyte and the gel electrolyte, and

wherein
the solid electrolyte comprises an oxide-based solid electrolyte, a sulfide-based solid electrolyte, a polymer solid electrolyte or a combination thereof, and
the gel electrolyte comprises a polymer gel electrolyte

13. The lithium metal battery of any of the claims 1 to claim 12,

wherein the cathode comprises a cathode current collector and a cathode active material layer,
at least one of the cathode current collector or the anode current collector comprises a base film and a metal layer on at least one side of the base film,
the base film comprises a polymer, the polymer comprising polyethylene terephthalate (PET), polyethylene (PE), polypropylene (PP), polybutylene terephthalate (PBT), polyimide (PI), or a combination thereof, and
the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

14. A method of preparing a lithium metal battery, the method comprising:

preparing an anode current collector;
forming a separator by forming a ceramic coating layer on at least one side of the porous substrate;
preparing a cathode;
arranging the separator on the anode current collector such that the ceramic coating layer faces the anode current collector;
forming a battery structure by arranging the anode current collector, the separator, and the cathode;
accommodating the battery structure in a battery case and injecting a gel-type polymer electrolyte forming composition into the battery structure; and
forming a gel-type polymer electrolyte by curing the gel-type polymer electrolyte forming composition, to produce the lithium metal battery of claim 1.

15. The method of claim 14,

wherein the forming of the gel-type polymer electrolyte by curing the gel-type polymer electrolyte forming composition is performed by a heat treatment on the battery structure, and
the heat treatment is performed at a temperature of about 40 °C to about 120 °C, and/or
the gel-type polymer electrolyte forming composition comprises a crosslinkable monomer, a lithium salt, an organic solvent, and an initiator.

# FIG. 1

# FIG. 2

# FIG. 3

# FIG. 4

# FIG. 5

Europäisches
Patentamt

European
Patent Office

Office européen
des brevets

# EUROPEAN SEARCH REPORT

Application Number

EP 24 15 6276

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 546 063 B (UNIV XUCHANG) 22 June 2021 (2021-06-22) * figure 1 * * the whole document * * claim 1 * | 1-15 | INV. H01M4/38 H01M10/052 H01M10/0565 H01M10/42 H01M50/434 H01M50/449 |
| A | WO 2022/100661 A1 (ZHUHAI COSMX BATTERY CO LTD [CN]) 19 May 2022 (2022-05-19) * the whole document * | 1-13 | |

TECHNICAL FIELDS
SEARCHED    (IPC)

H01M

The present search report has been drawn up for all claims

| Place of search | Date of completion of the search | Examiner |
|---|---|---|
| Munich | 27 June 2024 | Riederer, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 6276

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2024

| Patent document cited in search report | | Publication date | Patent family member(s) | | Publication date |
|---|---|---|---|---|---|
| CN 109546063 | B | 22-06-2021 | NONE | | |
| WO 2022100661 | A1 | 19-05-2022 | CN | 112397685 A | 23-02-2021 |
| | | | EP | 4160731 A1 | 05-04-2023 |
| | | | JP | 2023531545 A | 24-07-2023 |
| | | | KR | 20230043126 A | 30-03-2023 |
| | | | US | 2023135612 A1 | 04-05-2023 |
| | | | WO | 2022100661 A1 | 19-05-2022 |

EPO FORM P0459

For more details about this annex : see Official Journal of the European Patent Office, No. 12/82

**EP 4 439 719 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230039360

- KR 1020230042562